(19) **Europäisches Patentamt / European Patent Office / Office européen des brevets**

(11) **EP 3 506 951 B1**

(12) **FASCICULE DE BREVET EUROPEEN**

(45) Date de publication et mention de la délivrance du brevet:
**04.10.2023 Bulletin 2023/40**

(21) Numéro de dépôt: **17755452.4**

(22) Date de dépôt: **10.08.2017**

(51) Classification Internationale des Brevets (IPC):
**G01N 21/64** *(2006.01)*      **G02B 21/16** *(2006.01)*

(52) Classification Coopérative des Brevets (CPC):
**G01N 21/6428; G01N 21/6458; G02B 21/16;**
G01N 2021/6419; G01N 2021/6441

(86) Numéro de dépôt international:
**PCT/EP2017/070307**

(87) Numéro de publication internationale:
**WO 2018/041588 (08.03.2018 Gazette 2018/10)**

(54) **PROCEDE DE DETECTION D'ESPECES FLUORESCENTES REVERSIBLEMENT PHOTOCOMMUTABLES A HAUTE FREQUENCE**

VERFAHREN ZUR DETEKTION VON MIT HOHER FREQUENZ REVERSIBEL PHOTOSCHALTBAREN FLUORESZENZSPEZIES

METHOD FOR DETECTING FLUORESCENT SPECIES THAT ARE REVERSIBLY PHOTOSWITCHABLE AT A HIGH FREQUENCY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.09.2016 FR 1658163**

(43) Date de publication de la demande:
**10.07.2019 Bulletin 2019/28**

(73) Titulaires:
- **Centre National de la Recherche Scientifique**
  **75016 Paris (FR)**
- **SORBONNE UNIVERSITE**
  **75006 Paris (FR)**
- **Ecole Normale Supérieure**
  **75230 Paris (FR)**

(72) Inventeurs:
- **QUERARD, Jérôme**
  **92120 Montrouge (FR)**
- **LE SAUX, Thomas**
  **75020 Paris (FR)**
- **JULLIEN, Ludovic**
  **94110 Arcueil (FR)**

(74) Mandataire: **IPAZ**
**Bâtiment Platon**
**Parc Les Algorithmes**
**91190 Saint-Aubin (FR)**

(56) Documents cités:
**WO-A1-2015/075209**

- YAN Y ET AL: "Optical switch probes and optical lock-in detection (OLID) imaging microscopy: high-contrast fluorescence imaging within living systems", BIOCHEMICAL JOURNAL, vol. 433, no. 3, 2011, pages 411-422, XP055366659, GB ISSN: 0264-6021, DOI: 10.1042/BJ20100992
- PETCHPRAYOON C ET AL: "Rational design, synthesis, and characterization of highly fluorescent optical switches for high-contrast optical lock-in detection (OLID) imaging microscopy in living cells", BIOORGANIC & MEDICINAL CHEMISTRY, PERGAMON, GB, vol. 19, no. 3, 7 juillet 2010 (2010-07-07), pages 1030-1040, XP028133966, ISSN: 0968-0896, DOI: 10.1016/J.BMC.2010.07.015 [extrait le 2010-07-10]

**(Cont. page suivante)**

EP 3 506 951 B1

- QUERARD J ET AL: "Photoswitching Kinetics and Phase-Sensitive Detection Add Discriminative Dimensions for Selective Fluorescence Imaging", ANGEWANDTE CHEMIE INTERNATIONAL EDITION, vol. 54, no. 9, 21 janvier 2015 (2015-01-21), pages 2633-2637, XP055212629, ISSN: 1433-7851, DOI: 10.1002/anie.201408985
- QUÉRARD J ET AL: "Kinetics of Reactive Modules Adds Discriminative Dimensions for Selective Cell Imaging", CHEMPHYSCHEM - A EUROPEAN JOURNAL OF CHEMICAL PHYSICS & PHYSICALCHEMISTRY., vol. 17, no. 10, 18 mai 2016 (2016-05-18), pages 1396-1413, XP055366531, DE ISSN: 1439-4235, DOI: 10.1002/cphc.201500987
- MARRIOTT G ET AL: "Optical lock-in detection imaging microscopy for contrast-enhanced imaging in living cells", PROCEEDINGS NATIONAL ACADEMY OF SCIENCES PNAS, vol. 105, no. 46, 18 novembre 2008 (2008-11-18), pages 17789-17794, XP055366352, US ISSN: 0027-8424, DOI: 10.1073/pnas.0808882105
- YAN Y ET AL: "Reversible optical control of cyanine fluorescence in fixed and living cells: optical lock-in detection immunofluorescence imaging microscopy", PHILOSOPHICAL TRANSACTIONS. ROYAL SOCIETY OF LONDON. B: BIOLOGICAL SCIENCES., vol. 368, no. 1611, 24 décembre 2012 (2012-12-24), pages 20120031-20120031, XP055366378, GB ISSN: 0962-8436, DOI: 10.1098/rstb.2012.0031
- Querard J ET AL: "Out-of-phase imaging after optical monochromatic modulation", Program, 248th ACS National Meeting and Exposition, 13 août 2014 (2014-08-13), XP055366925, Extrait de l'Internet: URL:http://acselb-529643017.us-west-2.elb.amazonaws.com/chem/248nm/program/view.php [extrait le 2017-04-24]
- Querard J ET AL: "Out-of-phase titration after modulation of activating light (OPTIMAL) for selective and quantitative detection", Program, 248th ACS National Meeting and Exposition, 12 août 2014 (2014-08-12), XP055366926, Extrait de l'Internet: URL:http://acselb-529643017.us-west-2.elb.amazonaws.com/chem/248nm/program/view.php? obj_id=275943&terms= [extrait le 2017-04-24]

**Description**

L'invention porte sur un procédé de détection d'espèces fluorescentes réversiblement photocommutables à haute fréquence. Un tel procédé présente de nombreuses applications, notamment en chimie, en biologie et dans le domaine des mesures et du criblage environnementaux.

On entend par « espèce » une espèce chimique telle qu'une molécule ou un complexe, ou un objet physique tel qu'une nanoparticule. On entend par « espèce réversiblement photocommutable » (« *photoswitchable* » ou « *photoconvertible* » dans la littérature en anglais) une espèce présentant au moins deux états distincts, ayant des propriétés de fluorescence différentes, et pouvant passer d'un état à l'autre de manière réversible par effet de la lumière. Des exemples d'espèces fluorescentes réversiblement photocommutables sont la protéine « Dronpa » et le complexe « Spinach - DFHBI » (« Spinach » étant un aptamère d'ARN et DFHBI une sonde fluorogène). Ces espèces peuvent, en particulier, être utilisées comme sondes ou marqueurs. D'autres exemples d'espèces fluorescentes réversiblement commutables peuvent être des dérivés azoïques ou bien des échafaudages protéiques.

L'imagerie, et plus particulièrement la microscopie par fluorescence est devenue un outil indispensable en biologie, mais également dans d'autres disciplines telles que la science des matériaux. Ses applications, cependant, sont limitées par la capacité d'observer un signal d'intérêt dans un fond de fluorescence ou de bruit. Ce problème est particulièrement aigu dans les applications d'imagerie *in vivo,* animale ou végétale, dans lesquelles les marqueurs fluorescents à détecter sont dispersés dans un milieu complexe auto-fluorescent et/ou diffusant ; le signal utile se retrouve alors noyé dans un bruit de fond intense.

Une autre limite des techniques de détection et d'imagerie par fluorescence réside dans la largeur de la bande spectrale des fluorophores généralement employés par rapport à la largeur de la bande spectrale visible : il est difficile de détecter sélectivement plus de quatre marqueurs fluorescents dans un même échantillon, car leurs spectres d'émission tendent à se superposer.

Pour surmonter ces limites, la demande de brevet WO 2015075209 A1 et l'article de J. Querard et al. « Photoswitching Kinetics and Phase-Sensitive Détection Add Discriminative Dimensions for Sélective Fluorescence Imaging », Angew. Chem. Int. Ed. 2015, 54, 266-2637 (2015), divulguent une méthode utilisant des sondes fluorescentes réversiblement photocommutables, dans laquelle on illumine un échantillon, contenant une espèce de fluorophore photocommutable avec une lumière modulée périodiquement. La composante de l'intensité émise par les fluorophores à la même pulsation est alors détectée, en quadrature de phase par rapport à l'onde d'excitation. Cette méthode permet de détecter sélectivement certains fluorophores réversiblement photocommutables en minimisant, dans certaines conditions calculées analytiquement en fonction des caractéristiques du fluorophore, le bruit apporté dans les méthodes traditionnelles par l'auto-fluorescence et/ou la diffusion du milieu de l'échantillon. Un des problèmes de cette méthode réside dans la fréquence d'acquisition d'images successives. Les différentes espèces fluorescentes réversiblement photocommutables utilisées dans l'état de l'art passent d'un état activé à leur état initial non activé de manière thermo-induite : le temps caractéristique de cette transition est par exemple de 5 à 10 secondes et correspond au temps d'acquisition d'une image en utilisant cette méthode. Cette échelle de temps est trop grande pour réaliser un grand nombre de mesures pertinentes en biologie.

Une autre technique de l'art antérieur est divulguée dans l'article de Yen-Cheng Chen *et al.* (Chen, Y. C., Jablonski, A. E., Issaeva, I., Bourassa, D., Hsiang, J. C., Fahrni, C. J., & Dickson, R. M., 2015, Optically Modulated Photoswitchable Fluorescent Proteins Yield Improved Biological Imaging Sensitivity, Journal of the American Chemical Society, 137(40), 12764-12767) qui propose une méthode de détection de fluorophore mettant en oeuvre une excitation hétérodyne d'une espèce fluorescente réversiblement photocommutable par deux sources d'illumination laser monochromes de longueurs d'onde d'excitation différentes. Cette technique propose un choix empirique des paramètres de mesure de la fluorescence d'une d'espèce, ce qui ne permet pas de transposer facilement ce type de mesure à d'autres espèces. De plus, le rapport signal sur bruit lors de la mesure d'une d'espèce fluorescente réversiblement photocommutable n'est pas optimal. Enfin, la méthode divulguée n'indique pas à l'homme du métier comment observer deux d'espèces fluorescentes réversiblement photocommutables en même temps.

Encore une autre technique de l'art antérieur permettant d'exploiter la dynamique temporelle d'une sonde réversiblement photoconvertible - qui lui est propre et est différente de celle de fluorophores interférents - pour extraire un signal utile du bruit de fond est connue sous le nom de OLID, acronyme de «Optical Lock-In Détection », c'est-à-dire « détection synchrone optique ». Elle est décrite dans l'article de G. Marriott et al. « Optical lock-in détection imaging microscopy for contrast-enhanced imaging in living cells », PNAS, vol. 105, n°46, pages 17789-17794 (18 novembre 2008), ainsi que dans l'article de Y. Yan et al. « Optical switch probes and optical lock-in détection (OLID) imaging microscopy : high-contrast fluorescence imaging with living systems », Biochem J (2011), 411 - 422 et dans celui de C. Petchprayoon et al. "Rational design, synthesis, and characterization of highly fluorescent optical switches for high-contrast optical lock-in détection (OLID) imaging microscopy in living cells », Bioorganic & Medicinal Chemistry 19 (2011), 1030 - 1040. Un inconvénient de cette technique est qu'elle ne fournit pas d'information quantitative sur la concentration du fluorophore réversiblement photoconvertible.

L'invention vise à remédier aux inconvénients précités de l'art antérieur, et plus particulièrement à :

- imager un échantillon en discriminant plusieurs fluorophores différents ;
- permettre d'imager des fluorophores selon une technique permettant d'éliminer le bruit de diffusion/d'auto-fluorescence à haute fréquence ;
- d'une manière générale, imager sélectivement et quantitativement une ou plusieurs sondes fluorescentes dans un mélange.

Un objet de l'invention permettant d'atteindre ce but, partiellement ou totalement, est un procédé de détection d'au moins une espèce fluorescente réversiblement photocommutable selon la revendication 1.

L'invention sera mieux comprise et d'autres avantages, détails et caractéristiques de celle-ci apparaîtront au cours de la description explicative qui suit, faite à titre d'exemple en référence aux dessins annexés dans lesquels :

- la figure 1 illustre un procédé de détection d'une espèce fluorescente réversiblement photocommutable P selon l'invention ;

- la figure 2 illustre un diagramme présentant un calcul théorique de la réponse d'une espèce fluorescente réversiblement photocommutable P dans le cas d'une réalisation appartenant à l'art antérieur ;

- la figure 3 illustre un diagramme présentant un calcul théorique de la réponse d'une espèce fluorescente réversiblement photocommutable dans une réalisation de l'invention ;

- la figure 4 illustre une réalisation de l'invention permettant d'imager plusieurs espèces fluorescentes réversiblement photocommutables lors de la même détection d'image ;

- la figure 5 illustre une simulation numérique correspondant à la quantification d'une espèce fluorescente réversiblement photocommutable en présence de composés interférents X ;

- la figure 6 est un graphique illustrant des propriétés photochimiques d'un ensemble d'espèces fluorescentes réversiblement photocommutables ;

- la figure 7 est un ensemble de photographies illustrant une comparaison expérimentale entre des réalisations de l'art antérieur et une réalisation de l'invention ;

- la figure 8 illustre une détection de l'image en fluorescence d'une cellule selon une réalisation de l'invention ;

- la figure 9 illustre un système mettant en oeuvre un procédé selon un mode de réalisation de l'invention.

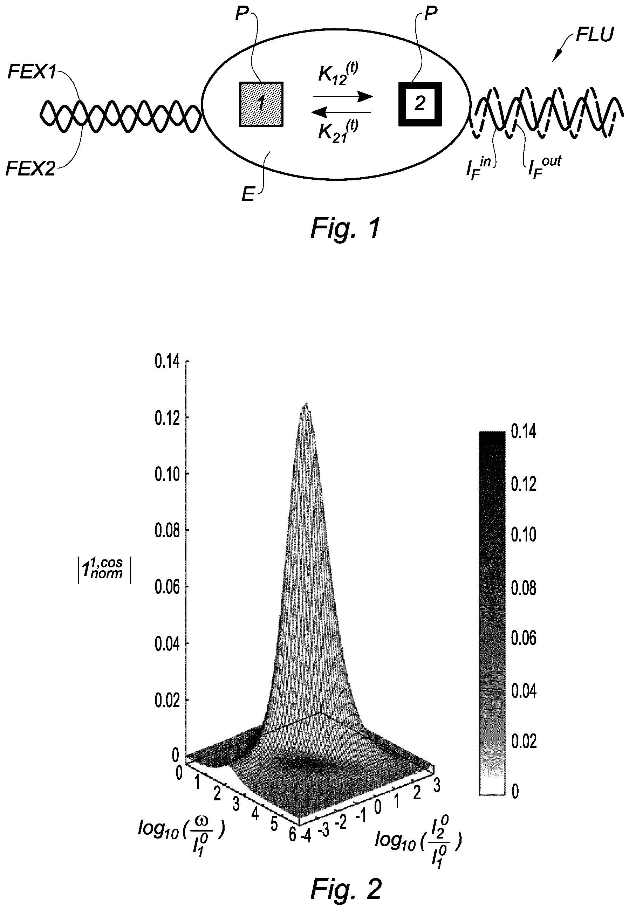

La figure 1 illustre un procédé de détection d'une espèce fluorescente réversiblement photocommutable P selon l'invention. Le procédé comprend l'éclairage d'un échantillon E par une première lumière d'éclairage FEX1, de longueur d'onde $\lambda_1$ et une seconde lumière d'éclairage FEX2, de longueur d'onde $\lambda_2$, différente de $\lambda_1$. Chacune des lumières d'éclairage FEX1, FEX2 est de préférence sensiblement monochromatique, c'est-à-dire que son spectre présente un seul maximum d'intensité, et/ou une largeur spectrale inférieure ou égale à 50 nm.

L'espèce fluorescente réversiblement photocommutable P présente deux états différents échangeables sous l'action de la lumière. Il peut s'agir d'une espèce fluorescente photochrome, ou de tout autre système dont le comportement dynamique peut se réduire à un échange entre deux états sous l'action de la lumière ; ces états peuvent correspondre à des configurations stéréochimiques différentes d'une molécule, à un état lié/non lié d'un complexe, etc. Sur la figure 1, le premier état - thermodynamiquement plus stable - est indiqué par 1 et représenté par un carré plein ; le second état - thermodynamiquement moins stable - est indiqué par 2 et représenté par un carré creux. Ces deux états possèdent des brillances différentes. Dans un souci de simplicité, et à titre d'exemple non limitatif, on peut considérer que seul l'état 1 est fluorescent de manière significative.

L'échantillon E, et plus précisément l'espèce P qu'il contient, éclairé par une première lumière d'éclairage FEX1 et par une seconde lumière d'éclairage FEX2, émet un rayonnement de fluorescence FLU dont l'intensité est, elle-aussi, modulée et peut être décomposée en :

- une composante en phase avec la première lumière d'éclairage FEX1, indiquée sur la figure par $I_F^{in}$; et
- une composante en quadrature avec le faisceau d'excitation, indiquée sur la figure par $I_F^{out}$. La demande de brevet WO 2015075209 A1 divulgue l'intérêt et le fondement d'une observation de la composante $I_F^{out}$ lors de l'observation d'espèces P.

Le comportement dynamique d'une espèce fluorescente réversiblement photocommutable P peut être décrit de la manière suivante. Sous l'illumination d'une espèce P par une lumière d'intensité $I(t)$ comprenant deux composantes $I_1(t)$ et $I_2(t)$, correspondant respectivement à une première lumière d'éclairage FEX1, de longueur d'onde $\lambda_1$ et à une seconde lumière d'éclairage FEX2, de longueur d'onde $\lambda_2$, le comportement dynamique de l'espèce P peut être décrit par l'échange à deux états suivant :

$$1 \quad \underset{k_{21}(t)}{\overset{k_{12}(t)}{\rightleftharpoons}} \quad 2 \tag{1}$$

dans lequel l'état 1, thermodynamiquement plus stable, est converti par une réaction photochimique en un état thermodynamiquement moins stable 2 avec une constante cinétique $k_{12}(t) = \sigma_{12,1}I_1(t) + \sigma_{12,2}I_2(t)$, et peut retourner vers l'état initial 1 plus stable par un processus photochimique et/ou thermique avec une constante cinétique $k_{21}(t) = \sigma_{21,1}I_1(t) + \sigma_{21,2}I_2(t) + k_{21}^{\Delta}$, dans lesquels $\sigma_{12,1}I_1(t)$, $\sigma_{21,2}I_2(t)$, $\sigma_{21,1}I_1(t)$, $\sigma_{21,2}I_2(t)$ représentent les contributions photochimiques et $k_{21}^{\Delta}$ la contribution thermique aux constantes de vitesse, $\sigma_{12,1}$ étant la section efficace de photoconversion de l'état 1 vers l'état 2 éclairée par la lumière FEX1, $\sigma_{12,2}$ étant la section efficace de photoconversion de l'état 1 vers l'état 2 éclairé par la lumière FEX2, $\sigma_{21,1}$ étant la section efficace de photoconversion de l'état 2 vers l'état 1 éclairée par la lumière FEX1 et $\sigma_{21,2}$ étant la section efficace de photoconversion de l'état 2 vers l'état 1 éclairée par la lumière FEX2. L'ensemble de ces constantes définissent le comportement de l'espèce P.

Par hypothèse, le système est éclairé de manière uniforme ou peut être considéré comme homogène à tout temps. L'évolution des concentrations 1 (concentration en état 1 de l'espèce P) et 2 (concentration en état 2 de l'espèce P) peut alors être décrite par le système d'équations suivant :

$$\frac{d1}{dt} = -k_{12}(t)\,1 + k_{21}(t)\,2 \tag{2}$$

et

$$\frac{d2}{dt} = k_{12}(t)\,1 - k_{21}(t)\,2 \tag{3}$$

En considérant que l'échantillon E est éclairé soudainement par deux sources d'éclairage constant, respectivement de longueur d'onde $\lambda_1$ et $\lambda_2$, l'éclairage est caractérisé par l'intensité $I(t) = I_1^0 + I_2^0 = I^0$ et les constantes cinétiques peuvent être écrites sous la forme :

$$k_{12}(t) = k_{12}^0 = k_{12,1}^0 + k_{12,2}^0, \tag{4}$$

$$k_{21}(t) = k_{21}^0 = k_{21,1}^0 + k_{21,2}^0 + k_{21}^{\Delta}. \tag{5}$$

où

$$k^0_{12,1} = \sigma_{12,1} I^0_1, \tag{6}$$

$$k^0_{21,1} = \sigma_{21,1} I^0_1, \tag{7}$$

$$k^0_{12,2} = \sigma_{12,2} I^0_2, \tag{8}$$

$$k^0_{21,2} = \sigma_{21,2} I^0_2. \tag{9}$$

En considérant que l'état initial ne contient que l'espèce 1, les concentrations de 1 et 2 évoluent selon :

$$2 - 2^0 = 1^0 - 1 = -2^0 \exp\left(-\frac{t}{\tau^0_{12}}\right) \tag{10}$$

où

$$\tau^0_{12} = \frac{1}{k^0_{12} + k^0_{21}} \tag{11}$$

correspond au temps de relaxation d'un fluorophore réversiblement photocommutable et $1°$ et $2^0$ aux concentrations 1 et 2 à l'état photostationnaire atteint au temps $\tau^0_{12}$. On a également :

$$1^0 = P_{tot} - 2^0 = \frac{1}{1 + K^0_{12}} P_{tot} \tag{12}$$

où :

$$K^0_{12} = \frac{k^0_{12}}{k^0_{21}} \tag{13}$$

et la concentration totale en espèce P vaut $P_{tot}$ = 1 + 2.

Il est possible d'analyser la réponse en émission fluorescente, ou rayonnement de fluorescence FLU d'une espèce fluorescente réversiblement photocommutable P quand elle est soumise à deux lumières d'éclairage modulées périodiquement FEX1, FEX2, correspondant à des réalisations de l'invention.

De manière générale, on peut considérer qu'une espèce fluorescente réversiblement photocommutable P est soumise à un éclairage comprenant deux composantes : un éclairage périodique $I_1(t)$ à la longueur d'onde $\lambda_1$ et un éclairage $I_2(t)$ à la longueur d'onde $\lambda_2$, qui peut être constant dans une réalisation différente de l'invention, ou modulé périodiquement dans l'ensemble des réalisations de l'invention. On peut écrire, dans le cas le plus général :

$$I(t) = I_1(t) + I_2(t) \tag{35}$$

et

$$I_j(t) \;=\; I_j^0 \left[ 1 + \alpha h_j(t) \right] \tag{36}$$

avec j = 1 ou 2. Dans l'équation (36), $\alpha$ correspond à l'amplitude de la modulation lumineuse et $h_j(t)$ correspond à des fonctions périodiques. Les équations (4) et (5) deviennent ici :

$$k_{12}(t) \;=\; k_{12,1}^0 \left[ 1 + \alpha h_1(t) \right] + k_{12,2}^0 \left[ 1 + \alpha h_2(t) \right] \tag{37}$$

et

$$k_{21}(t) \;=\; k_{21,1}^0 \left[ 1 + \alpha h_1(t) \right] + k_{21,2}^0 \left[ 1 + \alpha h_2(t) \right] + k_{21}^\Delta \tag{38}$$

En introduisant une fonction f(t), on peut développer l'expression des concentrations de la manière suivante :

$$2 \;=\; 2^0 + \alpha f(t) \tag{39}$$

et

$$1 \;=\; 1^0 - \alpha f(t) \tag{40}$$

Le système d'équations différentielles gouvernant les évolutions temporelles des concentrations 1 et 2 peut être résolu avec les équations (2) et (3) pour obtenir :

$$\frac{df(x)}{dx} \;=\; -f(x) + \left[ \mathfrak{a}_1 - \mathfrak{b}_1 f(x) \right] h_1(x) + \left[ \mathfrak{a}_2 - \mathfrak{b}_2 f(x) \right] h_2(x) \tag{41}$$

où :

$$x \;=\; \frac{t}{\tau_{12}^0} \tag{42}$$

$$\mathfrak{a}_1 \;=\; \rho_{12}^0 \Delta_{12,1}^0 \tau_{12}^0 \tag{43}$$

$$\mathfrak{b}_1 \;=\; \alpha \left( \sigma_{12,1} + \sigma_{21,1} \right) I_1^0 \tau_{12}^0 \tag{44}$$

$$\mathfrak{a}_2 \;=\; \rho_{12}^0 \Delta_{12,2}^0 \tau_{12}^0 \tag{45}$$

$$\flat_2 \;=\; \alpha\left(\sigma_{12,2} + \sigma_{21,2}\right) I_2^0 \tau_{12}^0 \tag{46}$$

et où :

$$\rho_{12}^0 \;=\; k_{12}^0 1^0 = k_{21}^0 2^0 \tag{47}$$

$$\Delta_{12,1}^0 \;=\; \frac{k_{12,1}^0}{k_{12,1}^0 + k_{12,2}^0} - \frac{k_{21,1}^0}{k_{21,1}^0 + k_{21,2}^0 + k_{21}^\Delta} \tag{48}$$

$$\Delta_{12,2}^0 \;=\; \frac{k_{12,2}^0}{k_{12,1}^0 + k_{12,2}^0} - \frac{k_{21,2}^0}{k_{21,1}^0 + k_{21,2}^0 + k_{21}^\Delta} \tag{49}$$

désignent respectivement la vitesse de la réaction correspondant à l'équation (1) à l'état stationnaire (avec 1° et 2° donnés dans l'équation (12)) et les différences des contributions relatives des moyennes des éclairages modulés (respectivement $I_1^0$ et $I_2^0$ ) aux constantes cinétiques menant respectivement de l'état 1 vers l'état 2 ou de l'état 2 vers l'état 1.

Après le temps de relaxation $\tau_{12}^0$ , un régime permanent est établi, dans lequel $f(x)$ est une fonction périodique continue. De manière plus générale, $f(x)$ peut être une fonction périodique. Dans les différentes réalisations de l'invention, la modulation d'un éclairage FEX1, FEX2 peut être réalisée par une pulsation fondamentale $\omega$ ou deux pulsations fondamentales ($\omega_1$ et $\omega_2$) ou au moins deux pulsations fondamentales, chacune des différentes pulsations fondamentales étant appelées dans ce cas par un terme générique $\omega_i$.

Dans un premier cas, la série de Fourier correspondant à $f(x)$ peut être écrite sous la forme :

$$f(\theta x) = a^0 + \sum_{n=1}^{+\infty}\left[a^{n,\cos}\cos\left(n\theta x\right) + b^{n,\sin}\sin\left(n\theta x\right)\right] \tag{50}$$

où :

$$\theta \;=\; \omega\tau_{12}^0, \tag{51}$$

et où $a^{n,cos}$ et $b^{n,sin}$ désignent les amplitudes des n-ièmes composantes de la série de Fourier.

Dans le second cas, la série de Fourier correspondant à $f(x)$ peut être écrite sous la forme :

$$f\left(\theta_1 x, \theta_2 x\right) \;=\; a^0 + \sum_{n=-\infty}^{+\infty}\sum_{m=-\infty}^{+\infty}\left\{a^{n,m,\cos}\cos\left[\left(n\theta_1 + m\theta_2\right)x\right] + b^{n,m,\sin}\sin\left[\left(n\theta_1 + m\theta_2\right)x\right]\right\} \tag{52}$$

où :

$$\theta_1 \;=\; \omega_1 \tau_{12}^0, \tag{53}$$

$$\theta_2 \;=\; \omega_2 \tau_{12}^0 \tag{54}$$

et où $a^0$, $a^{n,m,cos}$ et $b^{n,m,sin}$ correspondent aux amplitudes du 0-ième et des {n,m}-ièmes composantes de la série de Fourier. $a^0$ et/ou $a^{n,m,cos}$ et/ou $b^{n,m,sin}$ peuvent être extraits de l'équation (41) en identifiant les composantes du même ordre.

L'ensemble d'équations obtenues peut être transformé de manière à expliciter les modulations de concentration pour toutes les pulsations. On peut alors écrire :

$$2 \;=\; 2^\circ + \alpha \sum_{n=1}^{+\infty} \left[ 2^{n,\sin} \sin\left(n\theta x\right) + 2^{n,\cos} \cos\left(n\theta x\right) \right] \tag{55}$$

$$1 \;=\; 1^\circ - \alpha \sum_{n=1}^{+\infty} \left[ 2^{n,\sin} \sin\left(n\theta x\right) + 2^{n,\cos} \cos\left(n\theta x\right) \right] \tag{56}$$

où

$$2^\circ \;=\; 2^0 + \alpha a^0, \tag{57}$$

$$1^\circ \;=\; 1^0 - \alpha a^0, \tag{58}$$

$$2^{n,\sin} \;=\; -1^{n,\sin} = b^{n,\sin}, \tag{59}$$

$$2^{n,\cos} \;=\; -1^{n,\cos} = a^{n,\cos}. \tag{60}$$

ou bien :

$$2 \;=\; 2^\circ + \alpha \sum_{n=-\infty}^{+\infty} \sum_{m=-\infty}^{+\infty} \left\{ 2^{n,m,\sin} \sin\left[\left(n\theta_1 + m\theta_2\right) x\right] + 2^{n,m,\cos} \cos\left[\left(n\theta_1 + m\theta_2\right) x\right] \right\} \tag{61}$$

$$1 \;=\; 1^\circ - \alpha \sum_{n=-\infty}^{+\infty} \sum_{m=-\infty}^{+\infty} \left\{ 2^{n,m,\sin} \sin\left[\left(n\theta_1 + m\theta_2\right) x\right] + 2^{n,m,\cos} \cos\left[\left(n\theta_1 + m\theta_2\right) x\right] \right\} \tag{62}$$

où :

$$2^{\circ} \;\; = \;\; 2^{0} + \alpha a^{0}, \tag{63}$$

$$1^{\circ} \;\; = \;\; 1^{0} - \alpha a^{0}, \tag{64}$$

$$2^{n,m,\sin} \;\; = \;\; -1^{n,m,\sin} = b^{n,m,\sin}, \tag{65}$$

$$2^{n,m,\cos} \;\; = \;\; -1^{n,m,\cos} = a^{n,m,\cos}. \tag{66}$$

On peut également exprimer l'intensité fluorescente. On définit, dans l'équation (67), l'observable $O_j$ correspondant à l'observation à la longueur d'onde $\lambda_j$ avec j = 1 ou 2 :

$$O_j(t) \;\; = \;\; Q_{1,j}1(t) + Q_{2,j}2(t) \tag{67}$$

soit, en extrayant l'émission en fluorescence $I_F(t)$ dans l'équation (68) :

$$I_F(t) \;\; = \;\; O_1(t)I_1(t) + O_2(t)I_2(t). \tag{68}$$

On a, avec la dépendance temporelle donnée par les équations (55) et (56) :

$$O_j(t) = \mathfrak{O}_j^{\circ} + \sum_{n=1}^{\infty} \left[ \mathfrak{O}_j^{n,\sin} \sin\left(n\theta x\right) + \mathfrak{O}_j^{n,\cos} \cos\left(n\theta x\right) \right]. \tag{69}$$

avec :

$$\mathfrak{O}_j^{\circ} \;\; = \;\; Q_{1,j}1^{\circ} + Q_{2,j}2^{\circ} = Q_{1,j}1^{0} + Q_{2,j}2^{0} + \left(Q_{2,j} - Q_{1,j}\right)\alpha a^{0} \tag{70}$$

$$\mathfrak{O}_j^{n,\sin} \;\; = \;\; \left(Q_{2,j} - Q_{1,j}\right)\alpha b^{n,\sin} \tag{71}$$

$$\mathfrak{O}_j^{n,\cos} \;\; = \;\; \left(Q_{2,j} - Q_{1,j}\right)\alpha a^{n,\cos} \tag{72}$$

et

$$I_F(t) = \mathfrak{I}_{\mathfrak{F}}^{\circ} + \sum_{n=1}^{\infty} \left[ \mathfrak{I}_{\mathfrak{F}}^{n,\sin} \sin\left(n\theta x\right) + \mathfrak{I}_{\mathfrak{F}}^{n,\cos} \cos\left(n\theta x\right) \right].$$

$$(73)$$

Alors que les expressions des amplitudes des termes $O_j(t)$ sont génériques, les expressions des amplitudes des termes $I_F(t)$ varient avec les dépendances temporelles de l'éclairage.

On a, avec les dépendances temporelles de 1(t) et de 2(t) données par les équations (61) et (62) :

$$O_j(t) = \mathfrak{O}_j^{\circ} + \sum_{n=-\infty}^{+\infty} \sum_{m=-\infty}^{+\infty} \left\{ \mathfrak{O}_j^{n,m,\sin} \sin\left[(n\theta_1 + m\theta_2)\,x\right] + \mathfrak{O}_j^{n,m,\cos} \cos\left[(n\theta_1 + m\theta_2)\,x\right] \right\}$$

$$(74)$$

avec :

$$\mathfrak{O}_j^{\circ} \;\; = \;\; Q_{1,j}1^0 + Q_{2,j}2^0 + (Q_{2,j} - Q_{1,j})\,\alpha a^0$$

$$(75)$$

$$\mathfrak{O}_j^{n,m,\sin} \;\; = \;\; (Q_{2,j} - Q_{1,j})\,\alpha b^{n,m,\sin}$$

$$(76)$$

$$\mathfrak{O}_j^{n,m,\cos} \;\; = \;\; (Q_{2,j} - Q_{1,j})\,\alpha a^{n,m,\cos}$$

$$(77)$$

et

$$I_F(t) = \mathfrak{I}_{\mathfrak{F}}^{\circ} + \sum_{n=-\infty}^{+\infty} \sum_{m=-\infty}^{+\infty} \left\{ \mathfrak{I}_{\mathfrak{F}}^{n,m,\sin} \sin\left[(n\theta_1 + m\theta_2)\,x\right] + \mathfrak{I}_{\mathfrak{F}}^{n,m,\cos} \cos\left[(n\theta_1 + m\theta_2)\,x\right] \right\}.$$

$$(78)$$

dans lesquelles, de la même manière, les expressions des amplitudes des termes $O_j(t)$ sont génériques, les expressions des amplitudes des termes $I_F(t)$ varient avec les dépendances temporelles de l'éclairage.

Les inventeurs ont, dans un premier temps, considérés des cas dans lesquels les modulations des deux amplitudes d'éclairage sont faibles, et notées $\varepsilon$ à la place de $\alpha$ par la suite. Ce cas permet de linéariser les équations et de dériver des expressions analytiques.

Dans des réalisations appartenant à l'art antérieur, on réalise des modulations sinusoïdales de l'un des deux éclairages, par exemple l'éclairage FEX1 à la longueur d'onde $\lambda_1$ oscillant autour d'une intensité moyenne $I_1^0$ à la pulsation $\omega$ et avec une faible amplitude $\varepsilon I_1^0$ ($\varepsilon \ll 1$) sur lequel on superpose un éclairage d'intensité constante $I_2^0$ à une longueur d'onde $\lambda_2$. On a alors :

$$I(t) \;=\; I_1^0 \left[1 + \varepsilon \sin(\omega t)\right] + I_2^0 \qquad (79)$$

$$h_1(t) \;=\; \sin(\omega t) \qquad (80)$$

$$h_2(t) \;=\; 0. \qquad (81)$$

En développant au premier ordre l'expression de la perturbation lumineuse, l'équation (41) devient :

$$\frac{df(\theta x)}{dx} \;=\; -f(\theta x) + \mathfrak{a}_1 h_1(\theta x) \qquad (82)$$

Après le temps de relaxation $\tau_{12}^0$ donné dans l'équation (11), on peut dériver :

$$2^0 \;=\; 2^0 \qquad (83)$$

$$1^0 \;=\; 1^0 \qquad (84)$$

$$2^{1,\sin} \;=\; -1^{1,\sin} = \frac{\mathfrak{a}_1}{1+\theta^2} = \rho_{12}^0 \tau_{12}^0 \Delta_{12,1}^0 \frac{1}{1+\left(\omega\tau_{12}^0\right)^2} = \Delta_{12,1}^0 \frac{K_{12}^0}{\left(1+K_{12}^0\right)^2} \frac{1}{1+\left(\omega\tau_{12}^0\right)^2} P_{tot}$$

$$(85)$$

$$2^{1,\cos} \;=\; -1^{1,\cos} = -\frac{\mathfrak{a}_1\theta}{1+\theta^2} = -\rho_{12}^0 \tau_{12}^0 \Delta_{12,1}^0 \frac{\omega\tau_{12}^0}{1+\left(\omega\tau_{12}^0\right)^2} = -\Delta_{12,1}^0 \frac{K_{12}^0}{\left(1+K_{12}^0\right)^2} \frac{\omega\tau_{12}^0}{1+\left(\omega\tau_{12}^0\right)^2} P_{tot}$$

$$(86)$$

et :

$$\mathfrak{I}_{\mathfrak{F}}^0 \;=\; \left(Q_{1,1}1^0 + Q_{2,1}2^0\right) I_1^0 + \left(Q_{1,2}1^0 + Q_{2,2}2^0\right) I_2^0, \qquad (87)$$

$$\mathfrak{I}_{\mathfrak{F}}^{1,\sin} \;=\; \varepsilon \left\{ \left(Q_{1,1}1^0 + Q_{2,1}2^0\right) I_1^0 + \left[\left(Q_{1,1} - Q_{2,1}\right) I_1^0 + \left(Q_{1,2} - Q_{2,2}\right) I_2^0\right] 1^{1,\sin} \right\}$$

$$(88)$$

$$\mathfrak{I}_{\mathfrak{F}}^{1,\cos} \quad = \quad \varepsilon\left[(Q_{1,1} - Q_{2,1})\,I_1^0 + (Q_{1,2} - Q_{2,2})\,I_2^0\right] \mathbf{1}^{1,\cos}. \tag{89}$$

En utilisant deux longueurs d'ondes différentes, les échanges entre les états 1 et 2 sont essentiellement gouvernés par les contributions photochimiques en choisissant les intensités moyennes ( $I_1^0, I_2^0$ ) de manière à ce que :

$$\sigma_{21,1} I_1^0 + \sigma_{21,2} I_2^0 \gg k_{21}^\Delta$$

La figure 2 illustre un diagramme présentant un calcul théorique de la réponse d'une espèce fluorescente réversiblement photocommutable P dans le cas d'une réalisation appartenant à l'art antérieur. Le diagramme de la figure 2 illustre la valeur de l'amplitude normalisée des oscillations en quadrature de phase pour une concentration 1 ( $|\mathbf{1}_{\text{norm}}^{1,\cos}| = |\mathbf{1}^{1,\cos}/P_{tot}|$ ), en fonction des paramètres de contrôle $I_2^0/I_1^0$ et $\omega/I_1^0$. Ce cas correspond à un éclairage FEX1 à la longueur d'onde $\lambda_1$ oscillant autour d'une intensité moyenne $I_1^0$ à la pulsation $\omega$ et avec une faible amplitude $\varepsilon I_1^0$ ($\varepsilon \ll 1$) auquel on superpose un éclairage constant d'intensité $I_2^0$ à une longueur d'onde $\lambda_2$. L'espèce fluorescente réversiblement photocommutable P considérée est « Dronpa-2 », dont les inventeurs ont mesuré les paramètres cinétiques, correspondant à $\sigma_{12,1}$ = 196 m$^2$.mol$^{-1}$, $\sigma_{21,1}$ = 0 m$^2$.mol$^{-1}$, $\sigma_{12,2}$ = 0 m$^2$.mol$^{-1}$ , $\sigma_{21,2}$ = 413 m$^2$.mol$^{-1}$ et $k_{21}^\Delta$ = 1,4.10$^{-2}$ s$^{-1}$ et avec $I_1^0 = 100\frac{k_{21}^\Delta}{\sigma_{12,1}+\sigma_{21,1}}$ .

Dans ce cas, $|\mathbf{1}_{\text{norm}}^{1,\cos}|$ présente un maximum singulier quand les deux conditions de résonance suivantes sont remplies :

$$(\sigma_{12,1} + \sigma_{21,1})\,I_1^0 = (\sigma_{12,2} + \sigma_{21,2})\,I_2^0 \text{ et} \tag{90}$$

$$\omega = 2\,(\sigma_{12,1} + \sigma_{21,1})\,I_1^0. \tag{91}$$

Cette optimisation résulte d'une optimisation indépendante des termes $a_1$ et $\theta/[1 + \theta^2]$ de l'équation (86). $a_1$ correspond à la variation $\Delta 2^0$ du régime stationnaire $2^0$ après un saut d'amplitude $\Delta I_1^0 = \varepsilon I_1^0$ . Il est maximisé quand les constantes cinétiques des réactions photochimiques induites par les deux éclairages sont égales. Le second terme optimisé, $\theta/[1 + \theta^2]$, est maximisé en ajustant la pulsation $\omega$ au temps de relaxation $\tau_{12}^0$ de manière à avoir $\theta = 1$. Quand $\omega \gg 1/\tau_{12}^0$ , l'échange est lent par rapport aux variations de l'éclairage et le couple {1,2} n'a pas assez de temps pour répondre, de manière à faire disparaître les termes i$^{1,\sin}$ et i$^{1,\cos}$. A l'opposé, quand $\omega \ll 1/\tau_{12}^0$ , i$^{1,\cos}$ s'annule, et les concentrations **1** et **2** oscillent en phase avec la modulation de l'éclairage. De manière plus générale et dans l'ensemble des réalisations de l'invention, l'intensité moyenne de ladite première lumière d'éclairage (FEX1), l'intensité moyenne de ladite seconde lumière d'éclairage (FEX2), et leur pulsation $\omega$ sont choisies de manière à maximiser l'amplitude de la composante d'intensité dudit rayonnement de fluorescence (FLU) en quadrature de phase par rapport à la première lumière d'éclairage.

Dans des réalisations de l'invention, on module les deux lumières d'éclairage FEX1, FEX2 de manière sinusoïdale (ou plus généralement périodiquement), à la même pulsation $\omega$. Les inventeurs ont découvert la possibilité d'augmenter l'amplitude au premier ordre de la réponse aux modulations d'éclairage d'une espèce P par rapport au cas dans lequel la seconde lumière d'éclairage excite une espèce P avec une intensité constante. On considère, à titre d'exemple, qu' $I(t)$ comprend une superposition de deux modulations sinusoïdales de faibles amplitudes : d'une part, à la longueur d'onde $\lambda_1$ autour de l'intensité moyenne $I_1^0$ et à la pulsation $\omega$ et d'autre part, à la longueur d'onde $\lambda_2$ autour de l'intensité moyenne $I_2^0$ et à la pulsation $\omega$. On considère :

$$I(t) \quad = \quad I_1^0 \left[1 + \varepsilon h_1(t)\right] + I_2^0 \left[1 + \varepsilon h_2(t)\right] , \qquad (92)$$

$$h_1(t) \quad = \quad \sin\left(\omega t\right), \qquad (93)$$

$$h_2(t) \quad = \quad \sin\left(\omega t + \varphi\right) \qquad (94)$$

avec $\varepsilon \ll 1$.

En développant au premier ordre la perturbation de l'éclairage, $f(x) = f_1(\theta_x) + f_2(\theta_x)$ est une solution de l'équation (41) quand $f_1(\theta x)$ et $f_2(\theta x)$ sont des solutions de l'équation (95) suivante :

$$\frac{df_j(\theta x)}{dx} \quad = \quad -f_j(\theta x) + \mathfrak{a}_j h_j(\theta x) \qquad (95)$$

avec respectivement j = 1 ou 2. On peut remarquer que cette équation est similaire à l'équation (82). Après le temps de relaxation $\tau_{12}^0$ donné dans l'équation (11), on peut dériver :

$$2^0 \quad = \quad 2^0, \qquad (96)$$

$$1^0 \quad = \quad 1^0, \qquad (97)$$

$$2^{1,\sin} = -1^{1,\sin} \quad = \quad \frac{\mathfrak{a}_1}{1 + \theta^2} + \frac{\mathfrak{a}_2\left(\cos\varphi + \theta\sin\varphi\right)}{1 + \theta^2}, \qquad (98)$$

$$2^{1,\cos} = -1^{1,\cos} \quad = \quad -\frac{\mathfrak{a}_1\theta}{1 + \theta^2} + \frac{\mathfrak{a}_2\left(\sin\varphi - \theta\cos\varphi\right)}{1 + \theta^2} \qquad (99)$$

Pour des espèces P utilisées dans des réalisations de l'invention, de manière non limitative, la transition induite par effet photochimique de l'état 1 à l'état 2 (respectivement de l'état 2 à l'état 1) est gouvernée exclusivement par un éclairage à la longueur d'onde $\lambda_1$ (respectivement $\lambda_2$). En considérant que la constante cinétique de réaction de l'état 2 à l'état 1 est principalement gouvernée par la photochimie, on peut déduire que a$_1$ = -a$_2$. Les équations 98 et 99 deviennent :

$$2^{1,\sin} = -1^{1,\sin} = \frac{\mathfrak{a}_1}{1+\theta^2}\left[(1-\cos\varphi) - \theta\sin\varphi\right], \qquad (100)$$

$$2^{1,\cos} = -1^{1,\cos} = -\frac{\mathfrak{a}_1}{1+\theta^2}\left[\theta\left(1-\cos\varphi\right) + \sin\varphi\right] \qquad (101)$$

Les équations (100) et (101) montrent que $\varphi = \pi$ est typiquement favorable pour augmenter les amplitudes de la réponse en fluorescence. Les équations (100) et (101) deviennent alors :

$$2^{1,\sin} = -1^{1,\sin} = \frac{2\mathfrak{a}_1}{1+\theta^2} \qquad (102)$$

$$2^{1,\cos} = -1^{1,\cos} = -\frac{2\mathfrak{a}_1\theta}{1+\theta^2} \qquad (103)$$

et les termes des intensités en fluorescence sont :

$$\mathfrak{I}_{\mathfrak{F}}^{0} = \left(Q_{1,1}1^0 + Q_{2,1}2^0\right)I_1^0 + \left(Q_{1,2}1^0 + Q_{2,2}2^0\right)I_2^0 \qquad (104)$$

$$\mathfrak{I}_{\mathfrak{F}}^{1,\sin} = \varepsilon\left\{\left[\left(Q_{1,1}1^0 + Q_{2,1}2^0\right)I_1^0 - \left(Q_{1,2}1^0 + Q_{2,2}2^0\right)I_2^0\right]\right\} + \\ \varepsilon\left\{\left[\left(Q_{1,1} - Q_{2,1}\right)I_1^0 + \left(Q_{1,2} - Q_{2,2}\right)I_2^0\right]1^{1,\sin}\right\} \qquad (105)$$

$$\mathfrak{I}_{\mathfrak{F}}^{1,\cos} = \varepsilon\left[\left(Q_{1,1} - Q_{2,1}\right)I_1^0 + \left(Q_{1,2} - Q_{2,2}\right)I_2^0\right]1^{1,\cos}. \qquad (106)$$

En particulier, les inventeurs ont découvert que la variation d'éclairage correspondant à l'équation (92) avec $\varphi = \pi$ produit qualitativement les mêmes résultats pour $\mathfrak{I}_{\mathfrak{F}}^{1,\cos}$ par rapport à une excitation lumineuse gouvernée par l'équation (79) mais avec une amplitude qui, en théorie, est deux fois plus grande. Cette augmentation de l'amplitude permet de résoudre plusieurs problèmes techniques posés par l'art antérieur, en imageant de manière sélective une espèce P, obéissant aux conditions de résonance données par les équations (90) et (91), avec une plus grande résolution temporelle et un rapport signal sur bruit plus grand. De manière plus générale, dans l'ensemble des réalisations de l'invention dans lesquelles une première lumière d'éclairage FEX1 est modulée périodiquement à une pulsation $\omega$ et une seconde lumière d'éclairage FEX2 est modulée périodiquement à la même pulsation $\omega$, la seconde lumière d'éclairage FEX2 est modulée en antiphase, c'est-à-dire à $\varphi = \pi$ par rapport à la première lumière d'éclairage FEX1.

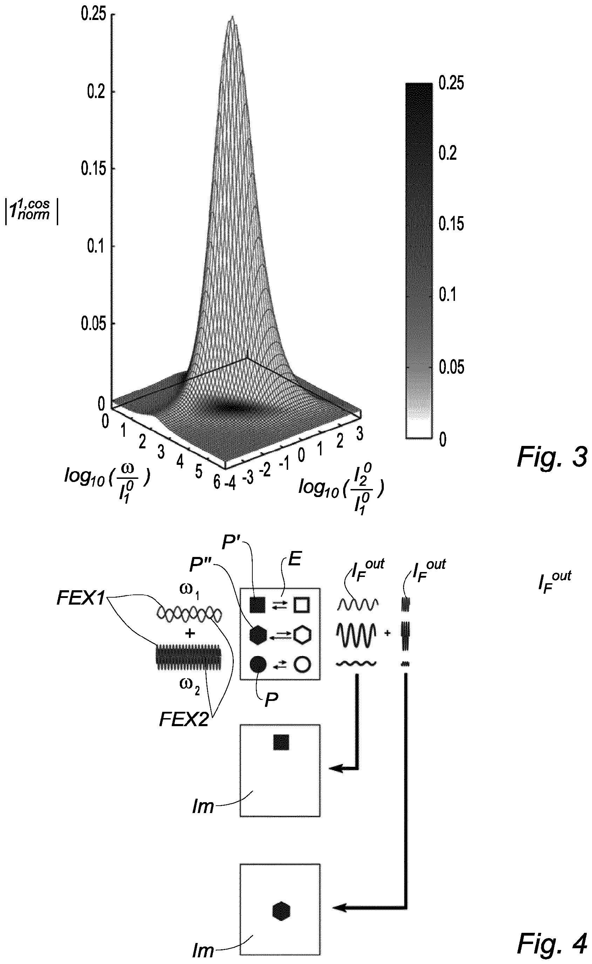

La figure 3 illustre un diagramme présentant un calcul théorique de la réponse d'une espèce fluorescente réversiblement photocommutable P dans une réalisation de l'invention. Le diagramme de la figure 3 illustre la valeur de l'amplitude normalisée des oscillations en quadrature de phase pour une concentration 1 ( $\left|1_{\text{norm}}^{1,\cos}\right| = \left|1^{1,\cos}/P_{tot}\right|$ ), en fonction des paramètres de contrôle $I_2^0/I_1^0$ et $\omega/I_1^0$. Ce cas correspond à un éclairage FEX1 à la longueur d'onde $\lambda_1$ oscillant autour d'une intensité moyenne $I_1^0$ à la pulsation $\omega$ et avec une faible amplitude $\varepsilon I_1^0$ ($\varepsilon \ll 1$) auquel on superpose un éclairage FEX2 à la longueur d'onde $\lambda_2$ oscillant autour d'une intensité moyenne $I_2^0$ à la pulsation $\omega$ et avec une faible amplitude $\varepsilon I_2^0$ ($\varepsilon \ll 1$). Les autres paramètres sont similaires aux paramètres utilisés dans la réalisation correspondant à la figure 2. Dans ce cas, $\left| 1_{\text{norm}}^{1,\cos} \right|$ présente un maximum singulier quand les deux conditions de résonance, correspondant à l'équation (90) et (91), sont remplies, comme dans la réalisation illustrée en figure 2, mais dont la norme est sensiblement deux fois plus grande, se traduisant par une augmentation d'un facteur 4 du rapport signal sur bruit. Le rapport signal sur bruit pourra être considéré comme un rapport signal sur interférences (SIR).

La figure 4 illustre une réalisation de l'invention permettant d'imager plusieurs espèces fluorescentes réversiblement photocommutables lors de la même détection d'image. Dans cette réalisation de l'invention, une première lumière d'éclairage FEX1 de longueur d'onde $\lambda_1$ est modulée périodiquement selon une première fonction sommant au moins deux premières composantes d'éclairage modulées par des pulsations $\omega_i$, les pulsations étant différentes les unes des autres. Dans l'exemple non limitatif illustré dans la figure 4, la première lumière d'éclairage FEX1 est modulée par une fonction sommant une composante de pulsation $\omega_1$ et une composante de pulsation $\omega_2$. Chacune des pulsations $\omega_i$ est associée, ou correspond, à une espèce fluorescente réversiblement photocommutable de l'échantillon E imagé. Dans le cas illustré en figure 4, la pulsation $\omega_1$ correspond à l'espèce P représentée par un carré plein et un carré vide, et la pulsation $\omega_2$ correspond à l'espèce P' représentée par un hexagone plein et un hexagone vide. L'espèce P" représentée par un rond ne correspond à aucune pulsation particulière. L'échantillon est également éclairé avec une seconde lumière d'éclairage FEX2 de longueur d'onde $\lambda_2$, modulée périodiquement selon une seconde fonction sommant au moins deux premières composantes d'éclairage modulées par les mêmes pulsations $\omega_i$, c'est-à-dire dans le cas non limitatif de la figure 4, par les pulsations $\omega_1$ et $\omega_2$.

Analytiquement, on peut considérer, de manière non limitative, que l'intensité $I(t)$ de l'éclairage est une superposition de deux modulations sinusoïdales de petites amplitudes, aux pulsations $\omega_1$ et $\omega_2$, oscillant autour d'une intensité moyenne $I_1^0$ à la longueur d'onde $\lambda_1$ et autour d'une intensité moyenne $I_2^0$ à la longueur d'onde $\lambda_2$. Dans d'autres réalisations de l'invention, les modulations peuvent être périodiques, de différentes formes, et de plus larges amplitudes. On considère :

$$I(t) \;=\; I_1^0 \left[ 1 + \varepsilon h_1(t) \right] + I_2^0 \left[ 1 + \varepsilon h_2(t) \right], \tag{121}$$

$$h_1(t) \;=\; \sin(\omega_1 t) + \beta \sin(\omega_2 t), \tag{122}$$

$$h_2(t) \;=\; -\sin(\omega_1 t) - \beta \sin(\omega_2 t), \tag{123}$$

avec $\varepsilon \ll 1$. Dans ce cas, $I_1^0 \left[ 1 + \varepsilon h_1(t) \right]$ correspond à une première fonction et $I_2^0 \left[ 1 + \varepsilon h_2(t) \right]$ correspond à une seconde fonction.

En développant au premier ordre les perturbations de l'éclairage, $f(x) = f_1(\theta_1 x) + \beta f_2(\theta_2 x)$ est une solution de l'équation (41) quand $f_1(\theta_1 x)$ et $f_2(\theta_2 x)$ sont solutions de l'équation (124) suivante :

$$\frac{df_j(\theta_j x)}{dx} \;=\; -f_j(\theta_j x) + (\mathfrak{a}_1 - \mathfrak{a}_2) \sin(\theta_j x) \tag{124}$$

avec respectivement j = 1 ou 2. Après le temps de relaxation $\tau_{12}^0$, on peut dériver :

$$2^{\mathrm{O}} = 2^{0}, \tag{125}$$

$$1^{\mathrm{O}} = 1^{0}, \tag{126}$$

$$2^{1,\mathrm{o,sin}} = -1^{1,\mathrm{o,sin}} = \frac{(\mathfrak{a}_1 - \mathfrak{a}_2)}{1 + \theta_1^2}, \tag{127}$$

$$2^{1,\mathrm{o,cos}} = -1^{1,\mathrm{o,cos}} = -\frac{(\mathfrak{a}_1 - \mathfrak{a}_2)\,\theta_1}{1 + \theta_1^2}, \tag{128}$$

$$2^{\mathrm{o,1,sin}} = -1^{\mathrm{o,1,sin}} = \beta\frac{(\mathfrak{a}_1 - \mathfrak{a}_2)}{1 + \theta_2^2} \quad \text{et} \tag{129}$$

$$2^{\mathrm{o,1,cos}} = -1^{\mathrm{o,1,cos}} = -\beta\frac{(\mathfrak{a}_1 - \mathfrak{a}_2)\,\theta_2}{1 + \theta_2^2} \tag{130}$$

Les équations (127) à (130) mènent à :

$$2^{1,\mathrm{o,sin}} = -1^{1,\mathrm{o,sin}} = \frac{\rho_{12}^0 \tau_{12}^0 \left(\Delta_{12,1}^0 - \Delta_{12,2}^0\right)}{1 + \left(\omega_1 \tau_{12}^0\right)^2} = \frac{K_{12}^0}{\left(1 + K_{12}^0\right)^2}\frac{\left(\Delta_{12,1}^0 - \Delta_{12,2}^0\right)}{1 + \left(\omega_1 \tau_{12}^0\right)^2}P_{tot} \tag{131}$$

$$2^{1,\mathrm{o,cos}} = -1^{1,\mathrm{o,cos}} = -\frac{\omega_1 \tau_{12}^0 \rho_{12}^0 \tau_{12}^0 \left(\Delta_{12,1}^0 - \Delta_{12,2}^0\right)}{1 + \left(\omega_1 \tau_{12}^0\right)^2} = -\frac{K_{12}^0}{\left(1 + K_{12}^0\right)^2}\frac{\omega_1 \tau_{12}^0 \left(\Delta_{12,1}^0 - \Delta_{12,2}^0\right)}{1 + \left(\omega_1 \tau_{12}^0\right)^2}P_{tot} \tag{132}$$

$$2^{\mathrm{o,1,sin}} = -1^{\mathrm{o,1,sin}} = \beta\frac{\rho_{12}^0 \tau_{12}^0 \left(\Delta_{12,1}^0 - \Delta_{12,2}^0\right)}{1 + \left(\omega_2 \tau_{12}^0\right)^2} = \beta\frac{K_{12}^0}{\left(1 + K_{12}^0\right)^2}\frac{\left(\Delta_{12,1}^0 - \Delta_{12,2}^0\right)}{1 + \left(\omega_2 \tau_{12}^0\right)^2}P_{tot} \tag{133}$$

17

$$2^{0,1,\cos} = -1^{0,1,\cos} = -\beta\frac{\omega_2\tau_{12}^0\rho_{12}^0\tau_{12}^0\left(\Delta_{12,1}^0 - \Delta_{12,2}^0\right)}{1+\left(\omega_2\tau_{12}^0\right)^2} = -\beta\frac{K_{12}^0}{\left(1+K_{12}^0\right)^2}\frac{\omega_2\tau_{12}^0\left(\Delta_{12,1}^0 - \Delta_{12,2}^0\right)}{1+\left(\omega_2\tau_{12}^0\right)^2}P_{tot}$$

$$(134)$$

et les termes associés des émissions en fluorescence oscillantes sont :

$$\mathfrak{J}_{\mathfrak{F}}^0 = \left(Q_{1,1}1^0 + Q_{2,1}2^0\right)I_1^0 + \left(Q_{1,2}1^0 + Q_{2,2}2^0\right)I_2^0$$

$$, \quad (135)$$

$$\mathfrak{J}_{\mathfrak{F}}^{1,0,\sin} = \varepsilon\left\{\left(Q_{1,1}1^0 + Q_{2,1}2^0\right)I_1^0 - \left(Q_{1,2}1^0 + Q_{2,2}2^0\right)I_2^0\right\} +$$

$$\varepsilon\left\{\left[(Q_{1,1} - Q_{2,1})I_1^0 + (Q_{1,2} - Q_{2,2})I_2^0\right]1^{1,0,\sin}\right\}$$

$$, \quad (136)$$

$$\mathfrak{J}_{\mathfrak{F}}^{1,0,\cos} = \varepsilon\left[(Q_{1,1} - Q_{2,1})I_1^0 + (Q_{1,2} - Q_{2,2})I_2^0\right]1^{1,0,\cos}$$

$$, \quad (137)$$

$$\mathfrak{J}_{\mathfrak{F}}^{0,1,\sin} = \varepsilon\beta\left\{\left(Q_{1,1}1^0 + Q_{2,1}2^0\right)I_1^0 - \left(Q_{1,2}1^0 + Q_{2,2}2^0\right)I_2^0\right\} +$$

$$\varepsilon\left\{\left[(Q_{1,1} - Q_{2,1})I_1^0 + (Q_{1,2} - Q_{2,2})I_2^0\right]1^{0,1,\sin}\right\}$$

$$et \quad (138)$$

$$\mathfrak{J}_{\mathfrak{F}}^{0,1,\cos} = \varepsilon\left[(Q_{1,1} - Q_{2,1})I_1^0 + (Q_{1,2} - Q_{2,2})I_2^0\right]1^{0,1,\cos}.$$

$$(139)$$

Dans cette réalisation de l'invention, la réponse en fluorescence de l'échantillon E à la superposition de deux modulations en antiphase de faibles amplitudes à deux différentes pulsations $\omega_1$ et $\omega_2$ permet d'utiliser les réalisations de l'invention correspondant aux figures 1 et 3 pour détecter simultanément et sélectivement deux espèces P' et P". Avantageusement, les espèces photocommutables partagent des conditions de résonance identiques en intensité d'éclairage $I_1^0$ et $I_2^0$, correspondant à l'équation (90). Avantageusement, chacune des espèces photocommutables est associée aux pulsations $\omega_1$ et $\omega_2$ telles que définies dans l'équation (91), et correspondant aux pulsations de résonance de chacune des espèces P' et P". En particulier, les expressions de fluorescence dérivées dans les équations (136) et (137) sont similaires à l'équation (107), mais avec une amplitude deux fois plus grande dans le cas particulier de cette réalisation de l'invention dans laquelle $a_1$ = -$a_2$, permettant une détection sélective et simultanée de deux espèces P' et P" distinctes.

Avantageusement, les modulations périodiques appliquées aux intensités de la première lumière d'éclairage FEX1 et de la seconde lumière d'éclairage FEX2 ne sont pas faibles devant l'intensité moyenne de ses lumières d'éclairage. Elles peuvent être par exemple du même ordre de grandeur. Dans le cas de modulations périodiques de larges amplitudes des intensités des lumières d'éclairage FEX1, FEX2, c'est à dire dans le cas où $\alpha$ < 1, les inventeurs ont découvert que les conditions décrites précédemment restent valides. Ces validations ont été réalisées en calculant numériquement les différents ordres de séries de Fourier tronquées dont les fonctions correspondantes ont été linéarisées dans les cas précédents considérant de faibles amplitudes de modulation d'intensité.

Les flèches de la figure 4 illustrent différentes images Im obtenues après post-traitement du signal d'intensité $I_F^{out}$. Ces images Im peuvent être obtenues par démodulation du signal acquis associée à la pulsation $\omega_i$ correspondant à l'espèce réversiblement photocommutable d'intérêt.

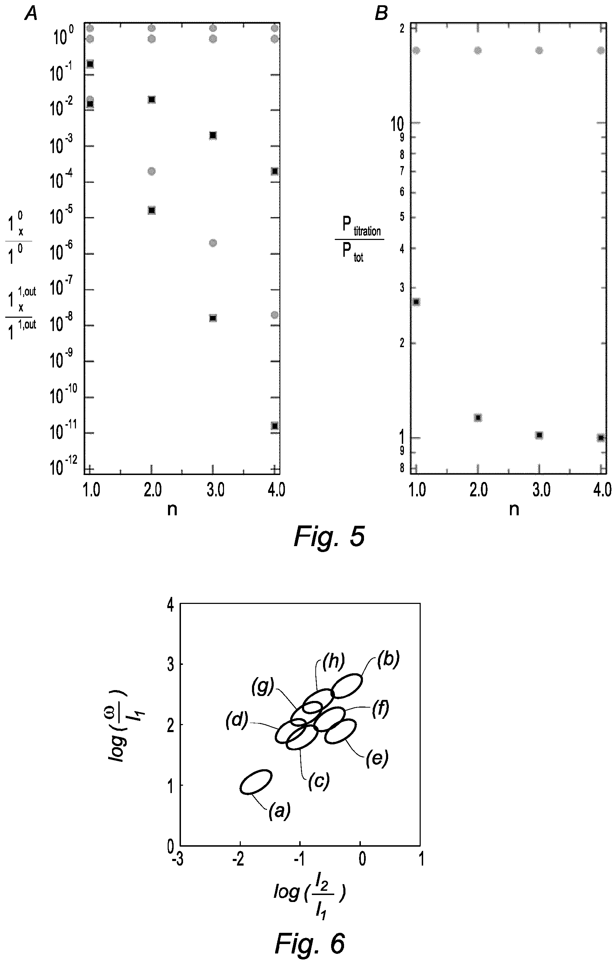

La figure 5 illustre une simulation numérique correspondant à la quantification d'une espèce P en présence de composés interférents X. En l'absence d'information sur les différentes espèces fluorescentes présentes dans un échantillon, on peut optimiser la réponse du premier ordre en quadrature de phase en fluorescence $I_F^{out}$ en choisissant un triplet ($I_1^0, I_2^0, \omega$) qui vérifie les conditions de résonance données dans les équations (90) et (91), de manière à imager sélectivement et quantitativement une espèce P parmi des espèces interférentes X, définies par l'ensemble de paramètres ($\sigma_{12,1,X}, \sigma_{21,1,X}, \sigma_{12,2,X}, \sigma_{21,2,X}, k_{21,X}^\Delta$), de concentration totale $X_{tot}$. Une espèce X peut dans ce cas ne pas être photocommutable, ce cas correspondant aux paramètres $\sigma_{12,i,X} = \sigma_{21,i,X} = 0$ (pour i = 1 ou 2) et $k_{21,X}^\Delta = 0$. La figure 5 illustre le cas d'un mélange d'espèces fluorophores réversiblement commutables P, dont seulement l'état 1 émet en fluorescence, caractérisés par la même brillance $Q_{1,j}$. Dans ce cas, un protocole consistant à illuminer à des intensités constantes $I_i^0$ donne un signal $I_F^0$ proportionnel à la somme des contributions des différents fluorophores, tel que :

$$I_F^0 \quad \propto \quad 1_P^0 + \sum_X 1_X^0 = (1_P^0/P_{tot})P_{titration}^0 \tag{223}$$

où :

$$P_{titration}^0 \quad = \quad P_{tot} + \sum_X \frac{(1_X^0/X_{tot})}{(1_P^0/P_{tot})} X_{tot} > P_{tot} \tag{224}$$

Quand le signal $I_F^0$ est utilisé pour titrer des espèces P, le résultat de la titration surestime la concentration totale $P_{tot}$ en raison des contributions des espèces interférentes. En revanche, la réponse du premier ordre en quadrature de phase à l'éclairage

$$\mathfrak{I}_{\mathfrak{F}}^{1,\cos}$$

- peut s'exprimer :

$$\mathfrak{I}_{\mathfrak{F}}^{1,\cos} \quad \propto \quad 1_P^{1,\cos} + \sum_X 1_X^{1,\cos} = (1_P^{1,\cos}/P_{tot})P_{titration}^{1,\cos} \tag{225}$$

où

$$P_{titration}^{1,\cos} = P_{tot} + \sum_X \frac{(1_X^{1,\cos}/X_{tot})}{(1_P^{1,\cos}/P_{tot})} X_{tot}$$

$$(226)$$

et permet de déterminer $P_{tot}$ quand le triplet de paramètres ( $I_1^0, I_2^0, \omega$ ) est ajusté dans les conditions de résonance pour une espèce P. En effet, le terme $1_P^{1,cos}$ est maximum alors que les termes $1_X^{1,cos}$ sont négligeables. Le signal issu de l'espèce P est prédominant par rapport à celui des autres espèces interférentes, et le résultat de titration $P_{titration}^{1,cos}$ est approximativement égal à $P_{tot}$.

Le panneau A de la figure 5 illustre une simulation numérique des amplitudes normalisées $1_X^0/1_P^0$ (illustrées par des disques gris) et des amplitudes normalisées de $1_X^{1,\cos}/1_P^{1,\cos}$ (illustrées par des carrés noirs) pour quatre mélanges équimolaires incluant l'espèce cible caractérisée par le quintuplet ($\sigma_{12,1}, \sigma_{21,1}, \sigma_{12,2}, \sigma_{21,2}, k_{21}^\Delta$) et seize autres espèces interférentes. Dans chaque échantillon marqué n, ces espèces interférentes correspondent aux seize quintuplets ($\sigma_{12,1,x}, \sigma_{21,1,x}, \sigma_{12,2,x}, \sigma_{21,2,x}, k_{21}^\Delta$), dont les quatre paramètres photochimiques diffèrent par n ordres de grandeur de ($\sigma_{12,1}, \sigma_{21,1}, \sigma_{12,2}, \sigma_{21,2}$).

La figure 6 illustre des propriétés photochimiques d'un ensemble d'espèces fluorescentes réversiblement photocommutables. Pour chacune des espèces considérées, les conditions de résonance selon les équations (90) et (91) ont été mesurées et sont illustrées par des courbes iso-valeur absolue de l'amplitude normalisée de la réponse en quadrature de phase en fluorescence du premier ordre. La courbe (a) correspond à l'espèce « Dronpa », la courbe (b) correspond à l'espèce « Dronpa-2 », la courbe (c) correspond à l'espèce « Dronpa-3 », la courbe (d) correspond à l'espèce « RS-FastLime », la courbe (e) correspond à l'espèce « Padron », la courbe (f) correspond à l'espèce « Kohinoor », la courbe (g) correspond à l'espèce « rsEFGP » et la courbe (h) correspond à l'espèce « rsEFGP2 ».

Dans l'une des réalisations de l'invention, on éclaire l'échantillon E avec deux lumières d'éclairage de longueurs d'onde différentes, et on module périodiquement chacune des lumières d'éclairage, pour imager plusieurs espèces réversiblement photocommutables sélectivement, comme illustré dans la figure 4, le triplet $I_1^0, I_2^0$ , $\omega_i$ étant choisi pour chacune des espèces de manière à maximiser la composante $I_F^{out}$ du rayonnement de fluorescence.

Dans une réalisation particulière de l'invention, on se place dans les conditions de résonances imposées par les deux intensités moyennes des lumières d'éclairage, c'est-à-dire selon la relation $(\sigma_{12,1} + \sigma_{21,1})$ $I_1^0 = (\sigma_{12,2} + \sigma_{21,2}) I_2^0$ . Graphiquement, cette solution consiste à imager deux espèces réversiblement photocommutables dont les conditions de résonance peuvent être illustrées par des points sensiblement proches de la même droite verticale sur la figure 6.

Une variante de l'invention consiste à se placer dans ces conditions et de choisir deux fréquences $\omega_1$ et $\omega_2$ (dans le cas d'une détection de deux espèces P' et P") vérifiant les conditions de résonances de chacune des espèces. Autrement dit, chaque pulsation $\omega$ vérifie la condition $\omega = 2 (\sigma_{12,1} + \sigma_{21,1}) I_1^0$ . Cette réalisation permet de maximiser l'amplitude de chaque réponse du premier ordre en quadrature de phase en fluorescence $I_F^{out}$.

Une autre variante de l'invention consiste à se placer dans les conditions vérifiant la relation $(\sigma_{12,1} + \sigma_{21,1})$ $I_1^0 = (\sigma_{12,2} + \sigma_{21,2}) I_2^0$ , et de choisir deux pulsations de modulation des lumières d'éclairage, chacune associée à une espèce réversiblement photocommutable, dont le rapport est, par exemple, strictement supérieur à 10, préférentiellement à 100. En effet, quand la relation (90) est vérifiée, le rapport des pulsations de résonance propre à deux espèces P' et P" peut être faible, par exemple inférieur à 10. Dans ce cas, en se plaçant dans des conditions vérifiant la relation (91), on maximise l'amplitude $I_F^{out}$ correspondant à chaque espèce, mais la contribution des interférences d'une amplitude associée à une espèce sur l'autre empêche d'obtenir un contraste optimal d'une espèce vis-à-vis de l'autre. On peut, dans cette variante, utiliser la relation (106) pour choisir des pulsations de modulation des lumières d'éclairage FEX1, FEX2 de manière à imposer un rapport entre les pulsations supérieur à une valeur prédéfinie, par exemple 10, pour augmenter le contraste.

D'une manière plus générale, il est possible de s'écarter du maximum d'amplitude du signal de fluorescence afin d'augmenter le contraste par rapport à une ou plusieurs espèces interférentes. On peut par exemple maximiser l'amplitude de la fluorescence sous contrainte d'assurer un contraste minimum, maximiser le contraste sous réserve d'assurer une amplitude minimale (exprimée généralement en pourcentage du maximum d'amplitude), voire déterminer une région de l'espace de paramètres ($\omega/I_1$, $I_1/I_2$) assurant à la fois une amplitude suffisamment importante et un contraste suffisamment élevé. De même, dans le cas où l'on vise la détection d'une seule espèce fluorescente, il peut être avantageux de s'écarter des conditions de résonance pour améliorer le contraste avec la fluorescence d'espèces interférentes, aux prix d'une diminution de l'amplitude du signal. Le plus souvent, néanmoins, on choisira des conditions d'illumination assurant une amplitude du signal égale à au moins 75%, de préférence 80% et de manière encore préférée 90% du maximum atteignable.

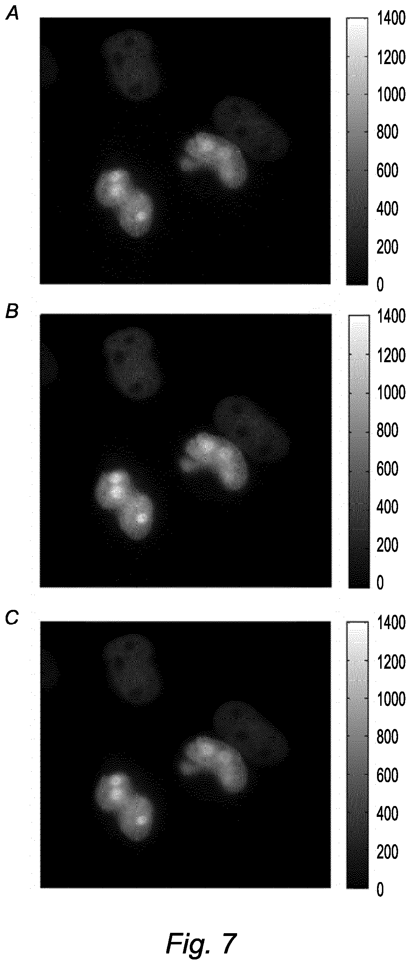

La figure 7 est un ensemble de photographies illustrant une comparaison expérimentale entre des réalisations de l'art antérieur et une réalisation de l'invention.

Le panneau A de la figure 7 est une photographie illustrant des noyaux cellulaires, marqués par une espèce P. La photographie est réalisée, selon une méthode de l'art antérieur, en imageant le signal $I_F^{out}$ avec une première lumière d'éclairage de longueur d'onde $\lambda_1$ = 480 nm modulée périodiquement, et avec une seconde lumière d'éclairage de longueur d'onde $\lambda_2$ = 405 nm, d'intensité constante.

Le panneau B de la figure 7 est une photographie illustrant les mêmes noyaux cellulaires, marqués par la même espèce P. La photographie est réalisée, selon une méthode de l'art antérieur, en imageant le signal $I_F^{out}$ avec une première lumière d'éclairage de longueur d'onde $\lambda_1$ = 480 nm d'intensité constante, et avec une seconde lumière d'éclairage de longueur d'onde $\lambda_2$ = 405 nm modulée périodiquement.

Le panneau C de la figure 7 est une photographie illustrant les mêmes noyaux cellulaires, marqués par la même espèce P. La photographie est réalisée, selon une méthode réalisation de l'invention, en imageant le signal $I_F^{out}$ avec une première lumière d'éclairage de longueur d'onde $\lambda_1$ = 480 nm modulée périodiquement, et avec une seconde lumière d'éclairage de longueur d'onde $\lambda_2$ = 405 nm modulée à la même période et en antiphase.

Dans le panneau A de la figure 7, les intensités sont multipliées par deux. Dans le panneau B de la figure 7, les intensités sont multipliées par -2. Les pics d'intensité sont sensiblement égaux dans l'ensemble des panneaux de la figure, illustrant l'augmentation du signal, décrite en figure 3, lors d'une réalisation mettant en oeuvre deux éclairages, modulés périodiquement en antiphase comparativement à un éclairage modulé périodiquement, ou à un éclairage modulé périodiquement et un second éclairage à éclairage constant. L'amplitude $I_F^{out}$ mesurée, dans des réalisations de l'art antérieur et/ou dans des réalisations de l'invention est algébrique : on peut discriminer des $I_F^{out}$ mesurés par leurs valeurs absolues et/ou par leurs signes.

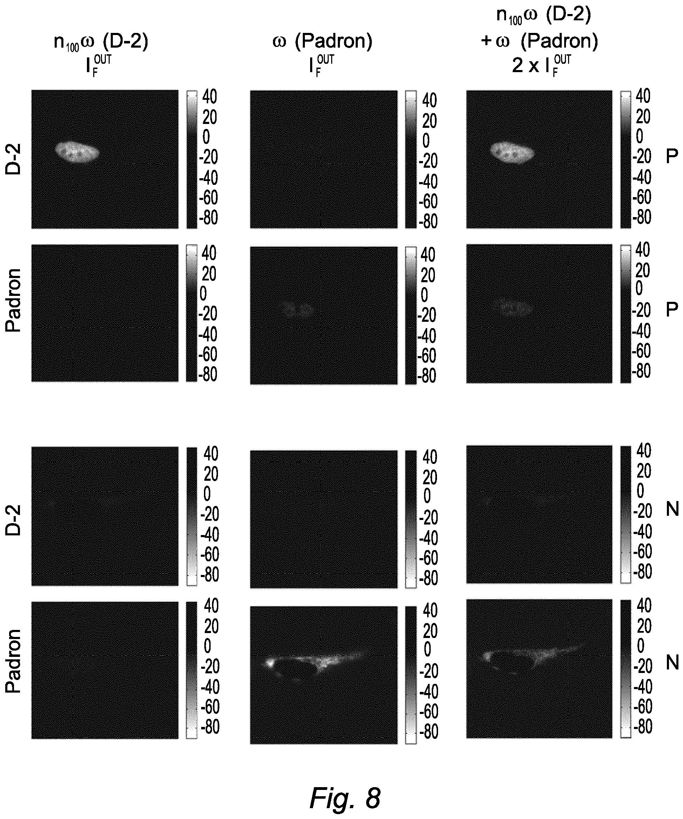

La figure 8 illustre une détection de l'image en fluorescence d'une cellule selon une réalisation de l'invention. Dans cet exemple, le noyau de la cellule est marqué par une espèce P, en l'occurrence « Dronpa-2 ». Les mitochondries de la cellule sont marquées par une autre espèce P' « Padron ». L'espèce P' « Padron » est caractérisée par un état 1 sombre et un état 2 fluorescent. Dans cet exemple, deux pulsations de modulation sont fixées. On impose un rapport de 100 entre les deux pulsations de modulation. Une première pulsation, $n_{100}\omega(D$ - $2)$ est associée à l'espèce P' « Dronpa-2 » ; cette pulsation est supérieure à la pulsation de résonance de « Dronpa-2 ». Une seconde pulsation, $\omega(Padron)$, est associées à l'espèce P" « Padron » ; cette pulsation est inférieure à la pulsation de résonance de « Padron ». Les légendes « Padron » et « D-2 » à gauche des images indiquent respectivement une démodulation du signal de fluorescence aux pulsations associée à « Padron » et à « Dronpa-2 ». Les légendes « P » et « N » à droite des images indiquent respectivement que l'amplitude représentée de $I_F^{out}$ est de signe positif (P) ou négatif (N).

La colonne de gauche de la figure 8 illustre des images obtenues selon une réalisation de l'invention, en éclairant avec deux lumières d'éclairage de longueurs d'onde différentes modulées en antiphase, à la pulsation $n_{100}\omega(D$ - $2)$. On observe de manière significative le noyau de la cellule, correspondant à une amplitude positive de $I_F^{out}$ et à une démodulation à la pulsation correspondant à D-2.

La colonne du milieu de la figure 8 illustre des images obtenues selon une réalisation de l'invention, en éclairant avec deux lumières d'éclairage FEX1, FEX2 de longueurs d'onde différentes modulées en antiphase, à la pulsation $\omega(Padron)$. On observe de manière significative les mitochondries de la cellule, correspondant à une amplitude négative de $I_F^{out}$ et à une démodulation à la pulsation correspondant à Padron.

La colonne de droite de la figure 8 illustre des images obtenues selon une réalisation de l'invention, en éclairant deux lumières d'éclairage FEX1, FEX2 de longueurs d'onde différentes, et modulées par des composantes aux pulsations $n_{100}\omega(D$ - $2)$ et $\omega(Padron)$, chaque composante de la seconde lumière d'éclairage FEX2 étant en antiphase de la composante correspondante de la première lumière d'éclairage FEX1. On observe de manière significative à la fois le noyau de la cellule, correspondant à une amplitude positive de $I_F^{out}$ et à une démodulation à la pulsation correspondant à D-2 et les mitochondries de la cellule, correspondant à une amplitude négative de $I_F^{out}$ et à une démodulation à la pulsation correspondant à Padron.

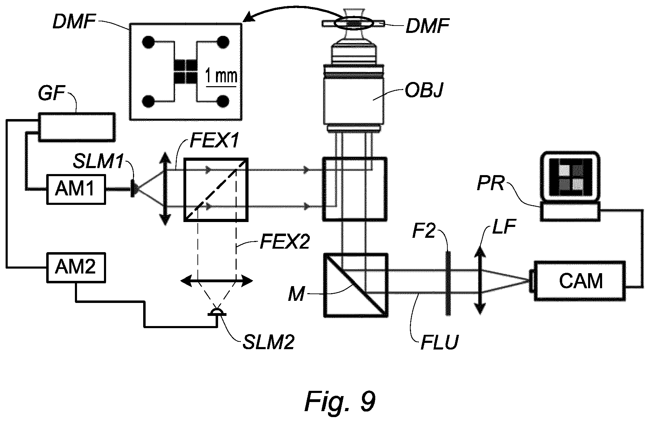

La figure 9 illustre un système mettant en oeuvre un procédé selon un mode de réalisation de l'invention. Ce système, illustré à titre d'exemple non limitatif, comprend deux sources de lumière SLM1 et SLM2 constituées chacune d'une diode électroluminescente. La source de lumière SLM1 est alimentée par une source d'alimentation AM1 et la source de lumière SLM2 est alimentée par une source d'alimentation AM2. La modulation de chacune des sources lumineuses SLM1 et SLM2 est obtenue par modulation de la puissance électrique d'alimentation respective au moyen d'un générateur de fonctions GF présentant deux sorties indépendants. L'émission des diodes électroluminescentes étant à bande large, les faisceaux FEX1 et FEX2, émis par SLM1 et SLM2 respectivement, sont collimatés par des lentilles, puis filtrés par deux filtres optiques avant d'être dirigés sur un échantillon, constitué par un dispositif microfluidique DMF ; dans un souci de simplicité, les filtres optiques ne sont pas représentés sur la figure. L'échantillon éclairé est observé, par sa face arrière, par un objectif OBJ qui collecte le rayonnement en fluorescence et le focalise en un faisceau FLU. Ce dernier est filtré (filtre F2) et dirigé, par un miroir M et une lentille LF, sur le capteur d'une caméra CAM. Un ordinateur comprend un processeur PR pilotant la caméra CAM de manière à détecter en quadrature de phase telle que décrit précédemment. Avantageusement, la fréquence d'acquisition de la caméra est commensurable de la fréquence de modulation des sources FEX1, FEX2. Pour réaliser une détection et/ou un titrage simples, sans imagerie, la caméra CAM peut être remplacée par un capteur ponctuel de lumière.

**Revendications**

1. Procédé de détection d'au moins une espèce fluorescente réversiblement photocommutable (P), comportant les étapes suivantes :

   (a) éclairer un échantillon contenant ladite ou au moins une dite espèce fluorescente réversiblement photocommutable avec une première lumière d'éclairage (FEX1), de longueur d'onde $\lambda_1$, et modulée périodiquement selon une première fonction comprenant une ou plusieurs composantes d'éclairage modulées par des pulsations $\omega_i$, ladite ou chaque dite pulsation $\omega_i$ étant associée à une dite espèce fluorescente réversiblement photocommutable (P) et avec une seconde lumière d'éclairage (FEX2) de longueur d'onde $\lambda_2$ différente de $\lambda_1$, modulée périodiquement selon une seconde fonction comprenant une ou plusieurs secondes composantes d'éclairage modulées par ladite ou lesdites pulsations $\omega_i$, ladite ou chaque dite pulsation $\omega_i$ étant égale à ladite ou à une dite pulsation $\omega_i$ de ladite ou d'une dite première composante d'éclairage;
   (b) détecter un rayonnement de fluorescence (FLU) émis par ledit échantillon ainsi éclairé ; et
   (c) extraire l'amplitude ($I_F^{out}$) de ladite ou de chaque composante de l'intensité dudit rayonnement de fluorescence (FLU) présentant la même pulsation $\omega_i$ que chaque dite composante d'éclairage et en quadrature de phase par rapport à ladite ou chaque dite première composante d'éclairage ;

   • pour ladite ou chaque dite pulsation $\omega_i$, ladite chaque dite seconde composante d'éclairage modulée par ladite pulsation $\omega_i$ étant en antiphase par rapport à ladite ou chaque dite première composante d'éclairage modulée par ladite pulsation $\omega_i$ ;
   • et l'intensité moyenne de ladite première lumière d'éclairage (FEX1), l'intensité moyenne de ladite seconde lumière d'éclairage (FEX2), et ladite ou lesdites pulsations étant choisies de manière à s'approcher d'un maximum de ladite ou chaque dite amplitude de la composante d'intensité dudit rayonnement de fluorescence.

2. Procédé pour la détection d'une espèce fluorescente selon la revendication 1 dans lequel l'intensité moyenne de ladite première lumière d'éclairage (FEX1), l'intensité moyenne de ladite seconde lumière d'éclairage (FEX2), et leur pulsation $\omega$ sont également choisies de manière à assurer un contraste minimum entre ladite amplitude de la composante d'intensité dudit rayonnement de fluorescence (FLU) et l'amplitude d'une composante d'intensité de fluorescence, présentant la même périodicité, issue d'une espèce interférente.

3. Procédé selon l'une des revendications précédentes pour la détection d'au moins deux espèces fluorescentes réversiblement photocommutables (P) présentant des propriétés dynamiques différentes, comportant les étapes suivantes :

   (a') éclairer un échantillon contenant chaque dite espèce fluorescente réversiblement photocommutable (P) avec une première lumière d'éclairage (FEX1) de longueur d'onde $\lambda_1$ et modulée périodiquement selon une première fonction sommant au moins deux premières composantes d'éclairage modulées par des pulsations $\omega i$, chaque dite pulsation $\omega i$ de chaque dite première composante d'éclairage étant associée à une dite espèce fluorescente réversiblement photocommutable (P), et étant différente de la ou des autres dites pulsations $\omega i$ ; et éclairer avec une seconde lumière d'éclairage (FEX2), de longueur d'onde $\lambda_2$ différente de $\lambda_1$, et modulée périodiquement selon une seconde fonction sommant au moins deux secondes composantes d'éclairage modulées par desdites pulsations ωi, chaque dite pulsation ωi de chaque dite seconde composante d'éclairage étant égale à une dite pulsation ωi d'une dite première composante d'éclairage ;

(b') détecter un rayonnement de fluorescence (FLU) émis par ledit échantillon ainsi éclairé ;

(c') extraire chaque amplitude ($I_F^{out}$) de la composante de l'intensité dudit rayonnement de fluorescence présentant la même pulsation $\omega_i$ que chaque dite composante d'éclairage, et en quadrature de phase par rapport à chaque dite première composante d'éclairage ;

pour chaque dite pulsation $\omega_i$, chaque dite seconde composante d'éclairage modulée par ladite pulsation $\omega_i$ étant en antiphase par rapport à chaque dite première composante d'éclairage modulée par ladite pulsation $\omega_i$ ;

et l'intensité moyenne de ladite première lumière d'éclairage (FEX1), l'intensité moyenne de ladite seconde lumière d'éclairage (FEX2), et lesdites pulsations étant choisies de manière à s'approcher d'un maximum de chaque dite amplitude de la composante d'intensité dudit rayonnement de fluorescence.

4. Procédé selon l'une des revendications précédentes dans lequel ladite ou chaque dite espèce fluorescente réversiblement photocommutable (P) présente un premier et un deuxième état chimique, au moins un desdits états étant fluorescent, ladite ou chaque dite espèce fluorescente réversiblement photocommutable (P) étant susceptible d'être convertie dudit premier état audit deuxième état par une première réaction photo-induite, puis de retourner audit premier état par une seconde réaction photo-induite, et dans lequel ladite première lumière d'éclairage (FEX1) présente une intensité moyenne $I_1^0$ et est modulée périodiquement selon une dite première fonction, et ladite seconde lumière d'éclairage (FEX2) présente une intensité moyenne $I_2^0$ avec pour ladite ou chaque dite espèce fluorescente réversiblement photocommutable (P) :

$$\left(\sigma_{12,1} + \sigma_{21,1}\right) I_1^0 = \left(\sigma_{12,2} + \sigma_{21,2}\right) I_2^0$$

où $\sigma_{12,1} I_1^0$ et $\sigma_{21,1} I_1^0$ sont, respectivement, les constantes cinétiques de ladite première et de ladite seconde réaction photo-induite par ladite première lumière d'éclairage (FEX1) de ladite espèce ; et où $\sigma_{12,2} I_2^0$ et $\sigma_{21,2} I_2^0$ sont, respectivement, les constantes cinétiques de ladite première et de ladite seconde réaction photo-induite par ladite seconde lumière d'éclairage (FEX2) de ladite espèce.

5. Procédé selon la revendication précédente dans lequel, pour ladite ou chaque dite pulsation $\omega_i$ correspondant à une dite espèce fluorescente réversiblement photocommutable (P) :

$$\omega_i = 2\left(\sigma_{12,1} + \sigma_{21,1}\right) I_1^0$$

où $\sigma_{12,1} I_1^0$ et $\sigma_{21,1} I_1^0$ sont, respectivement, les constantes cinétiques de ladite première et de ladite seconde réaction photo-induite par ladite première lumière d'éclairage (FEX1) de ladite espèce.

6. Procédé selon la revendication 4 dans lequel le rapport entre au moins deux dites pulsations $\omega_i$ est strictement supérieur à 10.

7. Procédé selon l'une des revendications précédentes dans lequel, lors de ladite étape a), ledit échantillon est éclairé par au moins une lumière d'éclairage sensiblement monochromatique.

8. Procédé selon l'une des revendications précédentes dans lequel lesdites étapes b) et c) sont mises en oeuvre par détection synchrone dudit rayonnement de fluorescence.

9. Procédé selon l'une des revendications précédentes comportant également l'étape suivante :
d) déterminer la concentration de ladite ou d'au moins une dite espèce fluorescente réversiblement photocommutable (P) à partir de la composante de l'intensité dudit rayonnement de fluorescence extraite lors d'une dite étape c).

10. Procédé selon l'une des revendications précédentes dans lequel ladite ou au moins une dite espèce fluorescente réversiblement photocommutable est choisie parmi :

une protéine fluorescente photochrome ; et
un complexe d'une biomolécule avec une sonde fluorogène.

11. Procédé selon l'une des revendications précédentes dont l'échantillon comporte de la matière biologique.

12. Procédé selon l'une des revendications précédentes dans lequel une dite lumière d'éclairage (FEX) comprend une partie de la lumière du jour et dans lequel ladite partie de la lumière du jour participe à l'intensité lumineuse reçue par ladite espèce fluorescente réversiblement photocommutable (P) en restant inférieure ou égale aux intensités moyennes desdites lumières d'éclairage (FEX1,FEX2).

13. Procédé d'imagerie à fluorescence mettant en oeuvre un procédé de détection selon l'une des revendications précédentes.

14. Procédé selon la revendication précédente dans lequel ledit échantillon peut comprendre un organisme vivant, et dans lequel au moins un élément choisi parmi la présence et la concentration d'une dite espèce fluorescente réversiblement photocommutable (P) est mesuré à partir de la composante de l'intensité dudit rayonnement de fluorescence extraite lors de ladite étape c) sans effectuer de prélèvement sur ledit organisme vivant.

**Patentansprüche**

1. Verfahren zum Detektieren mindestens einer reversibel photoschaltbaren fluoreszierenden Spezies (P), das die folgenden Schritte enthält:

(a) Beleuchten einer Probe, welche die oder mindestens eine reversibel photoschaltbare fluoreszierende Spezies beinhaltet, mit einem ersten Beleuchtungslicht (FEX1), mit Wellenlänge $\lambda_1$, und periodisch moduliert gemäß einer ersten Funktion, die eine oder mehrere Beleuchtungskomponenten umfasst, die durch Pulsationen $\omega_i$ moduliert werden, wobei die oder jede Pulsation $\omega_i$ einer reversibel photoschaltbaren fluoreszierenden Spezies (P) zugeordnet ist und mit einem zweiten Beleuchtungslicht (FEX2) mit Wellenlänge $\lambda_2$, die sich von $\lambda_1$ unterscheidet, periodisch moduliert gemäß einer zweiten Funktion, die eine oder mehrere zweite Beleuchtungskomponenten umfasst, die durch die eine oder die mehreren Pulsationen $\omega_i$ moduliert sind, wobei die eine oder jede Pulsation $\omega_i$ gleich der oder einen Pulsation $\omega_i$ der oder einer ersten Beleuchtungskomponente ist;
(b) Detektieren von Fluoreszenzstrahlung (FLU), die durch die derartig beleuchtete Probe emittiert wird; und
(c) Extrahieren der Amplitude ($I_F^{out}$) aus der oder jeder Intensitätskomponente der Fluoreszenzstrahlung (FLU), die denselben Puls $\omega_i$ wie jede Beleuchtungskomponente aufweist und in Phasenquadratur in Bezug auf die oder jede erste Beleuchtungskomponente;

• für die oder jede Pulsation $\omega_i$, wobei die durch die Pulsation $\omega_i$ modulierte zweite Beleuchtungskomponente in Antiphase in Bezug auf die oder jede durch die Pulsation $\omega_i$ modulierte erste Beleuchtungskomponente ist;
• und die mittlere Intensität des ersten Beleuchtungslichts (FEX1), die mittlere Intensität des zweiten Beleuchtungslichts (FEX2), und wobei die eine oder die Pulsationen so gewählt sind, dass sie sich einem Maximum der oder jeder Amplitude der Intensitätskomponente der Fluoreszenzstrahlung nähern.

2. Verfahren zum Detektieren einer fluoreszierenden Spezies nach Anspruch 1, wobei die mittlere Intensität des ersten Beleuchtungslichts (FEX1), die mittlere Intensität des zweiten Beleuchtungslichts (FEX2) und ihre Pulsation w ebenfalls so gewählt sind, dass ein minimaler Kontrast zwischen der Amplitude der Intensitätskomponente der Fluoreszenzstrahlung (FLU) und der Amplitude einer Fluoreszenzintensitätskomponente, die die gleiche Periodizität aufweist, die von einer interferierenden Spezies stammt, gewährleistet ist.

3. Verfahren nach einem der vorstehenden Ansprüche zum Detektieren von mindestens zwei reversibel photoschaltbaren fluoreszierenden Spezies (P), die unterschiedliche dynamische Eigenschaften aufweisen, das die folgenden Schritte enthält:

(a') Beleuchten einer Probe, die jede reversibel photoschaltbare fluoreszierende Spezies (P) beinhaltet, mit einem ersten Beleuchtungslicht (FEX1) mit Wellenlänge $\lambda_1$ und periodisch moduliert gemäß einer ersten Funktion, die mindestens zwei erste Beleuchtungskomponenten summiert, die durch Pulsationen $\omega_i$ moduliert sind, wobei jede Pulsation $\omega_i$ jeder ersten Beleuchtungskomponente einer reversibel photoschaltbaren fluoreszierenden Spezies (P) zugeordnet ist und sich von der oder den anderen Pulsationen $\omega_i$ unterscheidet; und Beleuchten mit einem zweiten Beleuchtungslicht (FEX2), mit Wellenlänge $\lambda_2$, die sich von $\lambda_1$ unterscheidet, und gemäß einer zweiten Funktion periodisch moduliert, die mindestens zwei zweite Beleuchtungskomponenten summiert, die durch die Pulsationen $\omega_i$ moduliert sind, wobei jede Pulsation $\omega_i$ jeder zweiten Beleuchtungskomponente gleich einer Pulsation $\omega_i$ einer ersten Beleuchtungskomponente ist;

(b') Detektieren von Fluoreszenzstrahlung (FLU), die durch die derart beleuchtete Probe emittiert wird;

(c') Extrahieren jeder Amplitude ($I_F^{out}$) aus der Intensitätskomponente der Fluoreszenzstrahlung, welche die gleiche Pulsation $\omega_i$ wie jede Beleuchtungskomponente aufweist und in Phasenquadratur in Bezug auf jede erste Beleuchtungskomponente;

wobei für jede Pulsation $\omega_i$ jede zweite Beleuchtungskomponente, die durch die Pulsation $\omega_i$ moduliert ist, in Antiphase in Bezug auf jede erste Beleuchtungskomponente ist, die durch die Pulsation $\omega_i$ moduliert ist; und die mittlere Intensität des ersten Beleuchtungslichts (FEX1), die mittlere Intensität des zweiten Beleuchtungslichts (FEX2), und wobei die Pulsationen so gewählt sind, dass sie sich einem Maximum jeder Amplitude der Intensitätskomponente der Fluoreszenzstrahlung nähern.

4. Verfahren nach einem der vorstehenden Ansprüche, wobei die oder jede reversible photoschaltbare fluoreszierende Spezies (P) einen ersten und einen zweiten chemischen Zustand aufweist, wobei mindestens einer der Zustände fluoreszierend ist, wobei die oder jede reversibel photoschaltbare fluoreszierende Spezies (P) in der Lage ist, durch eine erste photoinduzierte Reaktion von dem ersten Zustand in den zweiten Zustand umgewandelt zu werden, dann durch eine zweite photoinduzierte Reaktion in den ersten Zustand zurückzukehren, und wobei das erste Beleuchtungslicht (FEX1) eine mittlere Intensität $I_1^0$ aufweist und periodisch gemäß einer ersten Funktion moduliert ist, und das zweite Beleuchtungslicht (FEX2) eine mittlere Intensität $I_2^0$ aufweist, wobei für die oder jede reversible photoschaltbare fluoreszierende Spezies (P):

$$\left(\sigma_{12,1} + \sigma_{21,1}\right)I_1^0 = \left(\sigma_{12,2} + \sigma_{21,2}\right)I_2^0$$

wobei $\sigma_{12,1}I_1^0$ und $\sigma_{21,1}I_1^0$ jeweils die kinetischen Konstanten der ersten und der zweiten durch das erste Beleuchtungslicht (FEX1) photoinduzierten Reaktion der Spezies sind; und wobei $\sigma_{12,2}I_2^0$ und $\sigma_{21,2}I_2^0$ die kinetischen Konstanten der ersten beziehungsweise der zweiten durch das zweite Beleuchtungslicht (FEX2) der Spezies photoinduzierten Reaktion sind.

5. Verfahren nach dem vorstehenden Anspruch wobei für die oder jede Pulsation $\omega_i$, die einer reversibel photoschaltbaren fluoreszierenden Spezies (P) entspricht:

$$\omega_i = 2\left(\sigma_{12,1} + \sigma_{21,1}\right)I_1^0$$

wobei $\sigma_{12,1}I_1^0$ und $\sigma_{21,1}I_1^0$ jeweils die kinetischen Konstanten der ersten und der zweiten durch das erste Beleuchtungslicht (FEX1) der Spezies photoinduzierten Reaktion sind.

6. Verfahren nach Anspruch 4, wobei das Verhältnis zwischen mindestens zwei Pulsationen $\omega_i$, strikt größer als 10 ist.

7. Verfahren nach einem der vorstehenden Ansprüche, wobei während des Schritts a) die Probe mit mindestens einem im Wesentlichen monochromatischen Beleuchtungslicht beleuchtet wird.

8. Verfahren nach einem der vorstehenden Ansprüche wobei die Schritte b) und c) durch synchrone Detektion der Fluoreszenzstrahlung implementiert werden.

**9.** Verfahren nach einem der vorstehenden Ansprüche, das ebenfalls den folgenden Schritt enthält:
d) Bestimmen der Konzentration der oder mindestens einer der reversibel photoschaltbaren fluoreszierenden Spezies (P) aus der Intensitätskomponente der Fluoreszenzstrahlung, die in Schritt c) extrahiert wird.

**10.** Verfahren nach einem der vorstehenden Ansprüche wobei die oder mindestens eine reversibel photoschaltbare fluoreszierende Spezies ausgewählt ist aus:

einem photochromen fluoreszierenden Protein; und
einem Komplex aus einem Biomolekül mit einer fluorogenen Sonde.

**11.** Verfahren nach einem der vorstehenden Ansprüche, bei dem die Probe biologisches Material enthält.

**12.** Verfahren nach einem der vorstehenden Ansprüche, wobei ein Beleuchtungslicht (FEX) einen Teil des Tageslichts umfasst und wobei der Teil des Tageslichts an der von der reversibel photoschaltbaren fluoreszierenden Spezies (P) empfangenen Lichtintensität teilnimmt, indem er kleiner oder gleich den mittleren Intensitäten der Beleuchtungslichter (FEX1, FEX2) bleibt.

**13.** Fluoreszenzbildgebungsverfahren, das ein Detektionsverfahren nach einem der vorstehenden Ansprüche implementiert.

**14.** Verfahren nach dem vorstehenden Anspruch, wobei die Probe einen lebenden Organismus umfassen kann, und wobei mindestens ein Element, ausgewählt aus dem Vorhandensein und der Konzentration einer reversibel photoschaltbaren fluoreszierenden Spezies (P), aus der Intensitätskomponente der Fluoreszenzstrahlung gemessen wird, die in Schritt c) extrahiert wird, ohne eine Probe von dem lebenden Organismus zu entnehmen.

**Claims**

**1.** A method for detecting at least one reversibly photoswitchable fluorescent species (P) including the following steps:

(a) illuminating a sample containing said at least one reversibly photoswitchable fluorescent species with a first illuminating light beam (FEX1), of wavelength $\lambda_1$, and periodically modulated according to a first function comprising one or more first illumination components modulated by pulsations $\omega_i$, said at least one pulsation $\omega i$ being associated with a reversibly photoswitchable fluorescent species (P), and with a second illuminating light beam (FEX2) of wavelength $\lambda_2$, different from $\lambda_1$, periodically modulated according to a second function comprising one or more second illumination components modulated by said at least one pulsation $\omega_i$, said at least one pulsation $\omega_i$ being equal to said at least one pulsation $\omega_i$ of the one or more first illuminating component;
(b) detecting fluorescent radiation (FLU) emitted by said sample thus illuminated; and
(c) extracting the amplitude ($I_F^{out}$) from the one or more intensity component of said fluorescent radiation (FLU) having the same pulsation $\omega_i$ as each illumination component and in phase quadrature with respect to the one or more first illumination component;

- for said at least one pulsation $\omega_i$, said one or more second illumination component modulated by the pulsation $\omega_i$ being in antiphase with respect to said one or more first illumination component modulated by said pulsation $\omega_i$
- and the average intensity of the first illuminating light beam (FEX1), the average intensity of the second illuminating light beam (FEX2), and said at least one pulsation being selected to approach a maximum of the at least one amplitude of the intensity component of the fluorescent radiation.

**2.** The method for detecting a fluorescent species according to claim 1, wherein the mean intensity of the first illuminating light beam (FEX1), the mean intensity of the second illuminating light beam (FEX2) and their pulsation $\omega$ are also chosen to ensure a minimum contrast between the amplitude of the intensity component of the fluorescence radiation (FLU) and the amplitude of a fluorescence intensity component having the same periodicity originating from an interfering species.

**3.** The method according to any one of the preceding claims for detecting at least two reversibly photoswitchable fluorescent species (P) having different dynamic properties, comprising the steps of:

26

(a') illuminating a sample containing each reversibly photoswitchable fluorescent species (P) with a first illuminating light beam (FEX1) having wavelength $\lambda_1$ and periodically modulated according to a first function summing at least two first illumination components modulated by pulsations $\omega_i$, each pulsation $\omega_i$ being associated with each first illumination component of a reversibly photoswitchable fluorescent species (P) and being different from the other pulsation(s) $\omega_i$; and

illuminating with a second illuminating light beam (FEX2), with wavelength $\lambda_2$ different from $\lambda_1$ and periodically modulated according to a second function summing at least two second illumination components modulated by pulsations $\omega_i$, each pulsation $\omega_i$ of each second illumination component being equal to a pulsation $\omega_i$ of a first illumination component;

(b') detecting fluorescence radiation (FLU) emitted by the sample so illuminated;

(c') extracting each amplitude ($I_F{}^{out}$) from the intensity component of the fluorescent radiation having the same pulsation $\omega_i$ as each illumination component and in phase quadrature with respect to each first illumination component;

wherein for each pulsation $\omega_i$, each second illumination component modulated by the pulsation $\omega_i$ is in antiphase with respect to each first illumination component modulated by the pulsation $\omega_i$;

and the average intensity of the first illuminating light beam (FEX1), the average intensity of the second illuminating light beam (FEX2), and wherein the pulsations are chosen to approach a maximum of each amplitude of the intensity component of the fluorescent radiation.

4. The method according to any one of the preceding claims, wherein the at least one reversibly photoswitchable fluorescent species (P) has a first and a second chemical state, at least one of said states being fluorescent, wherein the at least one reversibly photoswitchable fluorescent species (P) is capable of being converted from said first state to said second state by a first photoinduced reaction, then returning to the first state by a second photoinduced reaction, and wherein the first illuminating light beam (FEX1) has an average intensity $I_1^0$ and is periodically modulated according to a first function, and the second illuminating light beam (FEX2) has an average intensity $I_2^0$, wherein for said at least one reversible photoswitchable fluorescent species (P):

$$\left(\sigma_{12,1} + \sigma_{21,1}\right)I_1^0 = \left(\sigma_{12,2} + \sigma_{21,2}\right)I_2^0$$

wherein $\sigma_{12,1}I_1^0$ and $\sigma_{21,1}I_1^0$ j are respectively the kinetic constants of the first and second reactions of the species photoinduced by the first illuminating light beam (FEX1); and wherein $\sigma_{12,2}I_2^0$ and $\sigma_{21,2}I_2^0$ are respectively the kinetic constants of the first and second reactions photoinduced by the second illuminating light beam (FEX2) of the species.

5. The method according to the preceding claim wherein for said at least one pulsation $\omega_i$ corresponding to a reversibly photoswitchable fluorescent species (P):

$$\omega_i = 2\left(\sigma_{12,1} + \sigma_{21,1}\right)I_1^0$$

wherein $\sigma_{12,1}I_1^0$ and $\sigma_{21,1}I_1^0$ are respectively the kinetic constants of the first and second reactions photoinduced by the first illuminating light beam (FEX1) of the species.

6. The method according to claim 4, wherein the ratio between at least two pulsations $\omega i$, is strictly greater than 10.

7. The method according to any one of the preceding claims, wherein during step a) the sample is illuminated with at least one substantially monochromatic illuminating light beam.

8. The method according to any one of the preceding claims wherein steps b) and c) are implemented by synchronous detection of the fluorescent radiation.

9. The method according to any one of the preceding claims, also comprising the step of:
   d) determining the concentration of the at least one reversibly photoswitchable fluorescent species (P) from the intensity component of the fluorescence radiation extracted in step c).

10. The method according to any one of the preceding claims wherein the at least one reversibly photoswitchable fluorescent species is selected from:

    a photochromic fluorescent protein; and
    a complex of a biomolecule with a fluorogenic probe.

11. The method according to any one of the preceding claims, wherein the sample comprises biological material.

12. The method according to any one of the preceding claims, wherein an illuminating light beam (FEX) comprises a portion of daylight and wherein said portion of daylight participates in the light intensity received by the reversibly photoswitchable fluorescent species (P) by remaining less than or equal to the average intensities of the illuminating light beams (FEX1, FEX2).

13. A fluorescence imaging method implementing a detection method according to any one of the preceding claims.

14. The method according to the preceding claim, wherein said sample may comprise a living organism, and wherein at least one element selected from the presence and concentration of a reversibly photoswitchable fluorescent species (P) is measured from the intensity component of the fluorescence radiation extracted in step c) without taking a sample from said living organism.

*Fig. 1*

*Fig. 2*

Fig. 3

Fig. 4

A

$$\frac{1_x^0}{1^0}$$

$$\frac{1_x^{1,out}}{1^{1,out}}$$

B

$$\frac{P_{titration}}{P_{tot}}$$

Fig. 5

$$log(\frac{\omega}{I_1})$$

$$log(\frac{I_2}{I_1})$$

Fig. 6

*Fig. 7*

*Fig. 8*

*Fig. 9*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015075209 A1

**Littérature non-brevet citée dans la description**

- **J. QUERARD et al.** Photoswitching Kinetics and Phase-Sensitive Détection Add Discriminative Dimensions for Sélective Fluorescence Imaging. *Angew. Chem. Int. Ed. 2015,* 2015, vol. 54, 266-2637
- **CHEN, Y. C. ; JABLONSKI, A. E. ; ISSAEVA, I. ; BOURASSA, D. ; HSIANG, J. C. ; FAHRNI, C. J. ; DICKSON, R. M.** Optically Modulated Photoswitchable Fluorescent Proteins Yield Improved Biological Imaging Sensitivity. *Journal of the American Chemical Society,* 2015, vol. 137 (40), 12764-12767

- **G. MARRIOTT et al.** Optical lock-in détection imaging microscopy for contrast-enhanced imaging in living cells. *PNAS,* 18 Novembre 2008, vol. 105 (46), 17789-17794
- **Y. YAN et al.** Optical switch probes and optical lock-in détection (OLID) imaging microscopy : high-contrast fluorescence imaging with living systems. *Biochem J,* 2011, 411-422
- **C. PETCHPRAYOON et al.** Rational design, synthesis, and characterization of highly fluorescent optical switches for high-contrast optical lock-in détection (OLID) imaging microscopy in living cells. *Bioorganic & Medicinal Chemistry,* 2011, vol. 19, 1030-1040